# EUROPEAN PATENT APPLICATION

(11) **EP 4 683 261 A1**
(43) Date of publication of application: **21.01.2026**
(21) Application number: 25189245.1
(22) Date of filing: 14.07.2025
(51) Int. Cl.: H04L 5/00, H04L 5/14, H04W 52/02, H04W 8/22, G01S 13/00

(54) **METHOD OF MULTIPLE PHYSICAL DOWNLINK SHARED CHANNELS RECEPTION AND USER EQUIPMENT**

(30) Priority: 15.07.2024 US 202463671276 P
(71) Applicant: Industrial Technology Research Institute, 310401 Hsinchu (TW)
(72) Inventor: Chen, Jen-Hsien, 621 Jingpu Vil., Minxiong Township, Chiayi County (TW); Lee, Chien-Min, 324 Taoyuan City (TW); Lo, Li-Chung, 407 Taichung City (TW); Wang, Hung-Hsiang, 310 Zhudong Township, Hsinchu County (TW)
(74) Representative: Becker Kurig & Partner Patentanwälte mbB

(57) **Abstract**

A method of multiple physical downlink shared channels, multi-PDSCHs, reception and a user equipment (620) are provided. The method includes: receiving a downlink control information, DCI, from a network, wherein the DCI indicates a reception of multi-PDSCHs.

## Description

### BACKGROUND

### Technical Field

The disclosure is directed to a method of multiple physical downlink shared channels (multi-PDSCHs) reception and a user equipment (UE) using the same.

### Description of Related Art

In wireless communication systems, particularly in 5G communication systems, a base station (BS) may transmit and receive signals using different symbol types depending on the configuration of subcarrier allocation. One such configuration is referred to as a Subband-Fully-Duplex (SBFD) symbol, in which the BS (e.g., gNB) is capable of transmitting and receiving simultaneously within different subbands. To manage self-interference, spatial separation between transmission and reception may be required at the BS, resulting in distinct antenna configurations or beamforming settings for transmission and reception.

In contrast, a non-SBFD symbol does not support simultaneous transmission and reception. The BS must switch between transmission and reception in a time-division manner, eliminating the need for complex interference control. As a result, the antenna configuration of the BS during non-SBFD symbols may differ significantly from the antenna configuration used during SBFD symbols.

This discrepancy in spatial configurations across SBFD and non-SBFD symbols can pose challenges for UE, especially when the UE is required to receive multiple downlink shared channels (PDSCH) across different symbol types. In particular, a UE may fail to properly decode downlink transmissions if the UE applies a fixed spatial reception configuration that does not align with the BS's varying transmission patterns.

### SUMMARY

The disclosure is directed to a method of multi-PDSCHs reception and a UE using the same method.

The present disclosure is directed to a method of multiple physical downlink shared channels (multi-PDSCHs) reception. The method includes: receiving a downlink control information (DCI) from a network, wherein the DCI indicates a reception of multi-PDSCHs.

The present disclosure is directed to user equipment. The user equipment includes a transceiver and a processor coupled to the transceiver. The processor is configured to: receive a downlink control information (DCI) from a network via the transceiver, wherein the DCI indicates a reception of multi-PDSCHs.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of PDSCHs reception according to one embodiment of the present disclosure.
FIG. 2 illustrates a schematic diagram of PDSCHs reception according to one embodiment of the present disclosure.
FIG. 3 illustrates a schematic diagram of PDSCHs reception according to one embodiment of the present disclosure.
FIG. 4 illustrates a schematic diagram of PDSCHs reception according to one embodiment of the present disclosure.
FIG. 5 illustrates a schematic diagram of separate antenna settings for first symbol type and second symbol type according to one embodiment of the present disclosure.
FIG. 6 illustrates a schematic diagram of ISAC operation in different symbol types according to one embodiment of the present disclosure.
FIG. 7 illustrates a schematic diagram of separate antenna settings for different symbol types according to one embodiment of the present disclosure.
FIG. 8 illustrates a schematic diagram of DL reception across different symbol types according one embodiment of the present disclosure.
FIG. 9 illustrates a schematic diagram of a possible issue for SBFD operation according to one embodiment of the present disclosure.
FIG. 10 illustrates a schematic diagram of a possible issue for ISAC operation according to one embodiment of the present disclosure.
FIG. 11 illustrates a schematic diagram of multi-PDSCHs reception according to one embodiment of the present disclosure.
FIG. 12 illustrates a schematic diagram of multi-PDSCHs reception according to one embodiment of the present disclosure.
FIG. 13 illustrates a schematic diagram of multi-PDSCHs reception according to one embodiment of the present disclosure.
FIG. 14 illustrates a schematic diagram of multi-PDSCHs reception according to one embodiment of the present disclosure.
FIG. 15 illustrates a flowchart of selection of QCL assumption according to one embodiment of the present disclosure.
FIG. 16 illustrates a schematic diagram of multi-PDSCHs reception according to one embodiment of the present disclosure.
FIG. 17 illustrates a flowchart of selection of QCL assumption according to one embodiment of the present disclosure.
FIG. 18 illustrates a schematic diagram of PDSCHs reception according to one embodiment of the present disclosure.
FIG. 19 illustrates a schematic diagram of PDSCHs reception according to one embodiment of the present disclosure.
FIG. 20 illustrates a schematic diagram of PDSCHs reception according to one embodiment of the present disclosure.
FIG. 21 illustrates a schematic diagram of PDSCHs reception according to one embodiment of the present disclosure.
FIG. 22 illustrates a schematic diagram of PDSCHs reception according to one embodiment of the present disclosure.
FIG. 23 illustrates a flowchart of selection of QCL assumption according to one embodiment of the present disclosure.
FIG. 24 illustrates a flowchart of selection of QCL assumption according to one embodiment of the present disclosure.
FIG. 25 illustrates a schematic diagram of PDSCHs reception according to one embodiment of the present disclosure.
FIG. 26 illustrates a schematic diagram of PDSCHs reception according to one embodiment of the present disclosure.
FIG. 27 illustrates a schematic diagram of PDSCHs reception according to one embodiment of the present disclosure.
FIG. 28 illustrates a flowchart of selection of QCL assumption according to one embodiment of the present disclosure.
FIG. 29 illustrates a flowchart of selection of QCL assumption according to one embodiment of the present disclosure.
FIG. 30 illustrates a schematic diagram of PDSCHs reception according to one embodiment of the present disclosure.
FIG. 31 illustrates a schematic diagram of PDSCHs reception according to one embodiment of the present disclosure.
FIG. 32 illustrates a flowchart of selection of QCL assumption according to one embodiment of the present disclosure.
FIG. 33 illustrates a flowchart of selection of QCL assumption according to one embodiment of the present disclosure.
FIG. 34 illustrates a schematic diagram of PDSCHs reception according to one embodiment of the present disclosure.
FIG. 35 illustrates a schematic diagram of PDSCHs reception according to one embodiment of the present disclosure.
FIG. 36 illustrates a flowchart of selection of QCL assumption according to one embodiment of the present disclosure.
FIG. 37 illustrates a schematic diagram of PDSCHs reception according to one embodiment of the present disclosure.
FIG. 38 illustrates a flowchart of selection of QCL assumption according to one embodiment of the present disclosure.
FIG. 39 illustrates a schematic diagram of PDSCHs reception according to one embodiment of the present disclosure.
FIG. 40 illustrates a schematic diagram of PDSCHs reception according to one embodiment of the present disclosure.
FIG. 41 illustrates a schematic diagram of PDSCHs reception according to one embodiment of the present disclosure.
FIG. 42 illustrates a flowchart of selection of QCL assumption according to one embodiment of the present disclosure.
FIG. 43 illustrates a schematic diagram of PDSCHs reception according to one embodiment of the present disclosure.
FIG. 44 illustrates a schematic diagram of PDSCHs reception according to one embodiment of the present disclosure.
FIG. 45 illustrates a schematic diagram of PDSCHs reception according to one embodiment of the present disclosure.
FIG. 46 illustrates a schematic diagram of PDSCHs reception according to one embodiment of the present disclosure.
FIG. 47 illustrates a schematic diagram of PDSCHs reception according to one embodiment of the present disclosure.
FIG. 48 illustrates a schematic diagram of PDSCHs reception according to one embodiment of the present disclosure.
FIG. 49 illustrates a schematic diagram of PDSCHs reception according to one embodiment of the present disclosure.
FIG. 50 illustrates a schematic diagram of PDSCHs reception according to one embodiment of the present disclosure.
FIG. 51 illustrates a schematic diagram of PDSCHs reception according to one embodiment of the present disclosure.
FIG. 52 illustrates a schematic diagram of PDSCHs reception according to one embodiment of the present disclosure.
FIG. 53 illustrates a schematic diagram of DCI reception according to one embodiment of the present disclosure.
FIG. 54 illustrates a schematic diagram of PDSCHs reception according to one embodiment of the present disclosure.
FIG. 55 illustrates a schematic diagram of PDSCHs reception according to one embodiment of the present disclosure.
FIG. 56 illustrates a schematic diagram of PDSCHs reception according to one embodiment of the present disclosure.
FIG. 57 illustrates a schematic diagram of PDSCHs reception according to one embodiment of the present disclosure.
FIG. 58 illustrates a schematic diagram of PDSCHs reception according to one embodiment of the present disclosure.
FIG. 59 illustrates a schematic diagram of PDSCHs reception according to one embodiment of the present disclosure.
FIG. 60 illustrates a schematic diagram of PDSCHs reception according to one embodiment of the present disclosure.
FIG. 61 illustrates a flowchart of a method of multi-PDSCHs reception according to one embodiment of the present disclosure.
FIG. 62 illustrates a schematic diagram of a UE according to one embodiment of the present disclosure.

### DESCRIPTION OF THE EMBODIMENTS

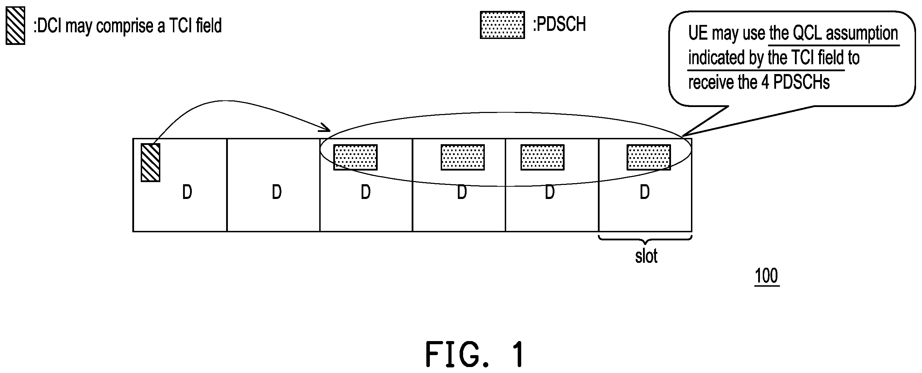

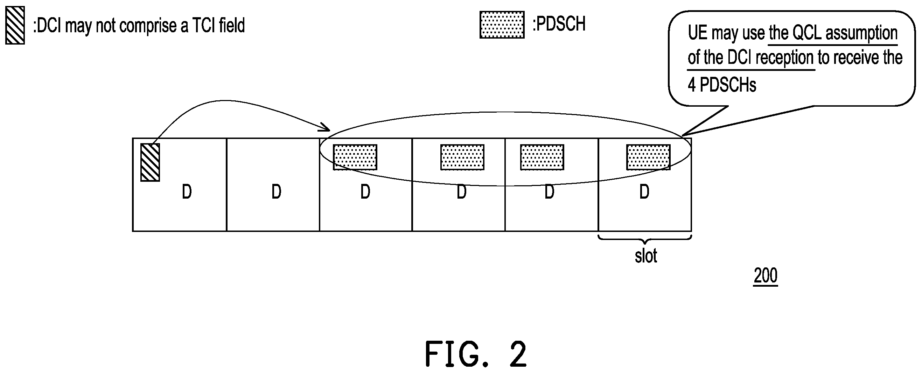

A UE may be scheduled with multi-PDSCHs reception by a single downlink control information (DCI) with a DCI field "Transmission Configuration Indication" that indicates a single transmission configuration indication (TCI) state (if the DCI field is present). A network (or BS) may transmit a signaling to a UE to configure *timeDurationForQCL* or *tci-PresentInDCI* to the UE. The UE may receive a DCI from the network, wherein the DCI may indicate a reception of multi-PDSCHs. The multi-PDSCHs may include PDSCHs associated with different symbol types (e.g., first symbol types and second symbol types different from the first symbol types). If a physical downlink shared channel (PDSCH) scheduling offset for all PDSCHs is greater than or equal to *timeDurationForQCL,* then: Case 1: *if tci-PresentInDCI* is enabled (e.g., if a TCI field is included in the DCI), the UE may use a single quasi co-location (QCL) assumption based on the indicated codepoint of the single DCI field "Transmission Configuration Indication" to receive each scheduled PDSCH, as shown in FIG. 1. FIG. 1 illustrates a schematic diagram 100 of PDSCHs reception according to one embodiment of the present disclosure, wherein "D" represents the slot for downlink reception. That is, the UE may use the QCL assumption indicated by the TCI field of the DCI to receive the PDSCHs; Case 2: if *tci-PresentInDCI* is disabled (e.g., if a TCI field is not included in the DCI), the UE may use single QCL assumption of the single scheduling DCI scheduled multi-PDSCHs to receive each scheduled PDSCHs, as shown in FIG. 2, where FIG. 2 illustrates a schematic diagram 200 of PDSCHs reception according to one embodiment of the present disclosure. That is, the UE may use the QCL assumption of the DCI reception to receive the PDSCHs.

A UE may be scheduled with multi-PDSCHs reception by a single DCI with a single DCI field "Transmission Configuration Indication" that indicates a single TCI state (if the DCI field is present). If a PDSCH scheduling offset for any scheduled PDSCH is less than *timeDurationForQCL,* the UE may use QCL assumption of default beam to receive any of the scheduled PDSCHs. If the PDSCH scheduling offset for each scheduled PDSCH is greater than or equal to *timeDurationForQCL,* then: Case 1: if *tci-PresentInDCI* is enabled, the UE may use single QCL assumption based on the indicated codepoint of the single DCI field "transmission Configuration Indication" to receive each scheduled PDSCH; Case 2: *if tci-PresentInDCI* is disabled, the UE may use single QCL assumption of the single scheduling DCI scheduled multi-PDSCHs to receive each scheduled PDSCHs.

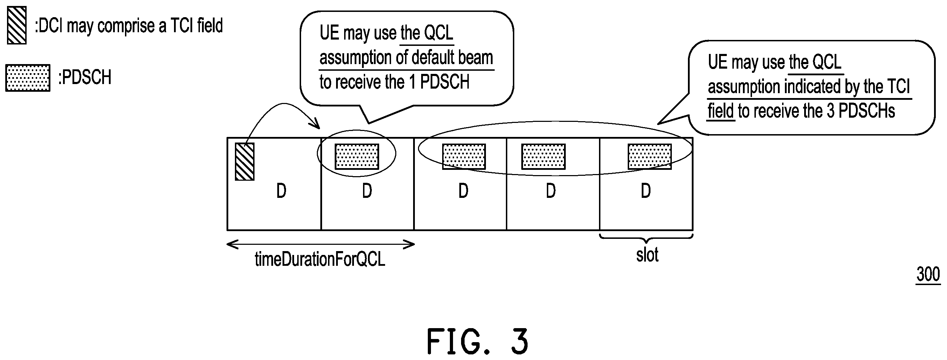

FIG. 3 illustrates a schematic diagram 300 of PDSCHs reception according to one embodiment of the present disclosure. Assume that *tci-PresentInDCI* is enabled. The UE may determine whether a time offset (e.g., PDSCH scheduling offset) between the DCI and the PDSCH resource indicated by the DCI is greater than or equal to *timeDurationForQCL.* Since the time offset corresponding to the first PDSCH is less than *timeDurationForQCL,* the UE may use the QCL assumption of the default beam to receive the first PDSCH. Since the time offset corresponding to the second PDSCH (or third or fourth PDSCH) is greater than or equal to *timeDurationForQCL,* the UE may use the QCL assumption indicated by the TCI field to receive the second PDSCH (or third or fourth PDSCH).

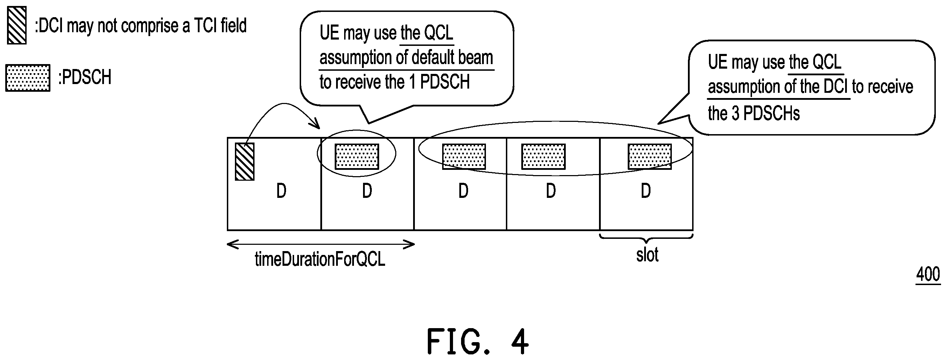

FIG. 4 illustrates a schematic diagram 400 of PDSCH reception according to one embodiment of the present disclosure. Assume that *tci-PresentInDCI* is disabled. The UE may determine whether a time offset (e.g., PDSCH scheduling offset) between the DCI and the PDSCH resource indicated by the DCI is greater than or equal to *timeDurationForQCL.* Since the time offset corresponding to the first PDSCH is less than *timeDurationForQCL,* the UE may use the QCL assumption of the default beam to receive the first PDSCH. Since the time offset corresponding to the second PDSCH (or third or fourth PDSCH) is greater than or equal to *timeDurationForQCL,* the UE may use the QCL assumption of the DCI to receive the second PDSCH (or third or fourth PDSCH). For example, if the UE has received the DCI by a specific spatial filter, the UE may use the same spatial filter to receive the second PDSCH (or third or fourth PDSCH).

In time division duplexing (TDD), the time domain resource is split between downlink (DL) and uplink (UL). Allocation of a limited time duration for the uplink in TDD would result in reduced coverage and increased latency. It would be worth studying the feasibility of allowing the simultaneous existence of downlink and uplink (i.e., full duplex), or more specifically, subband non-overlapping full duplex at the BS (e.g., gNB) side within a conventional TDD band. For SBFD operation, gNB may use a first antenna setting to perform DL or UL in non-SBFD symbol type, and may use a second antenna setting to perform DL and UL simultaneously in SBFD symbol type, wherein the second antenna setting may be different from the first antenna setting.

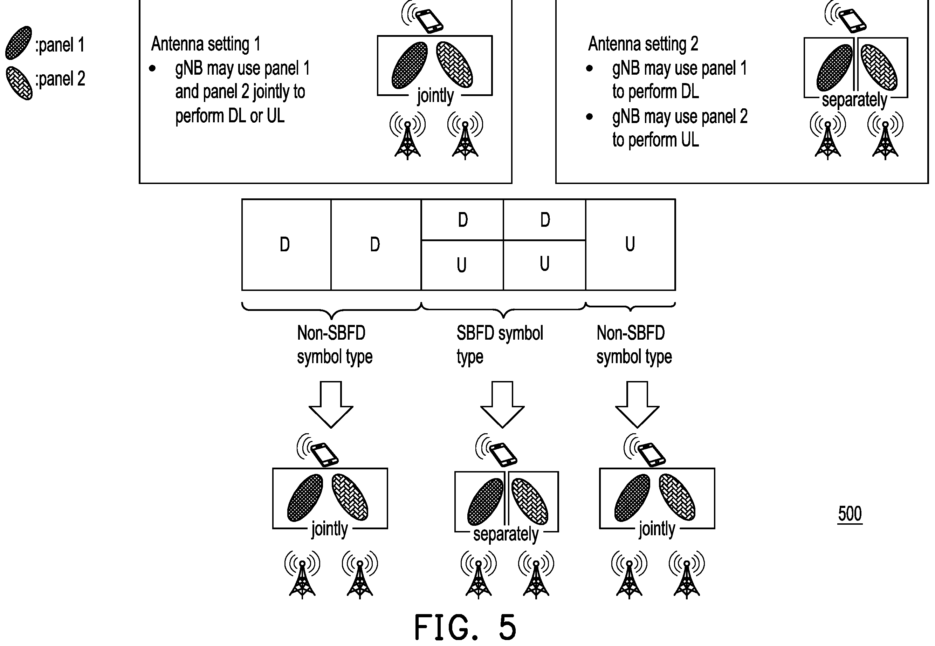

FIG. 5 illustrates a schematic diagram 500 of separate antenna settings for first symbol type and second symbol type according to one embodiment of the present disclosure, wherein "U" represents the slot for uplink transmission. The second symbol type may be different from the first symbol type, or the modulation and coding scheme (MCS) of the second symbol type may be different from the MCS of the first symbol type. For example, the first symbol type or the second symbol type may include a non-SBFD symbol type, a SBFD symbol type, a symbol type for communication only, a symbol type for communication and sensing, a symbol type for a power saving mode, or a symbol type for a normal mode.

In the present disclosure, the embodiments applied to one set of symbol types may also be applied to another set of symbol types. For example, a method for determining the QCL assumptions for the SBFD symbol type and the non-SBFD symbol type may also be applied to determining the QCL assumptions for the symbol type for communication only and the symbol type for both of communication and sensing, or be applied to determining the QCL assumptions for the symbol type for the power saving mode and the symbol type for the normal mode.

Referring to FIG. 5, the antenna setting 1 may be applied to non-SBFD symbols. When the antenna setting 1 is applied, the gNB may use panel 1 and panel 2 jointly to perform DL transmission or UL reception. The antenna setting 2 may be applied to SBFD symbols. When the antenna setting 2 is applied, the gNB may use panel 1 to perform DL transmission and use panel 2 to perform UL reception.

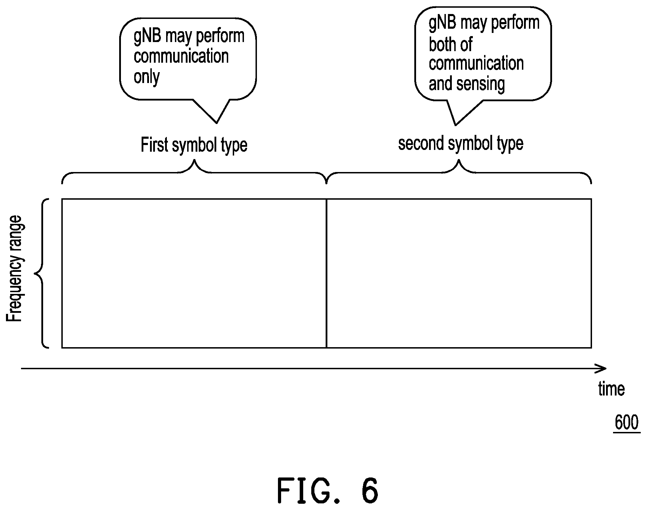

FIG. 6 illustrates a schematic diagram 600 of ISAC operation in different symbol types according to one embodiment of the present disclosure. In integrated sensing and communication (ISAC) operation, gNB may perform communication only within a symbol of the first symbol type, or may perform both of communication and sensing within a symbol of the second symbol type. In ISAC operation, the gNB may use a first antenna setting to perform communication, and may use a second antenna setting to perform both of communication and sensing.

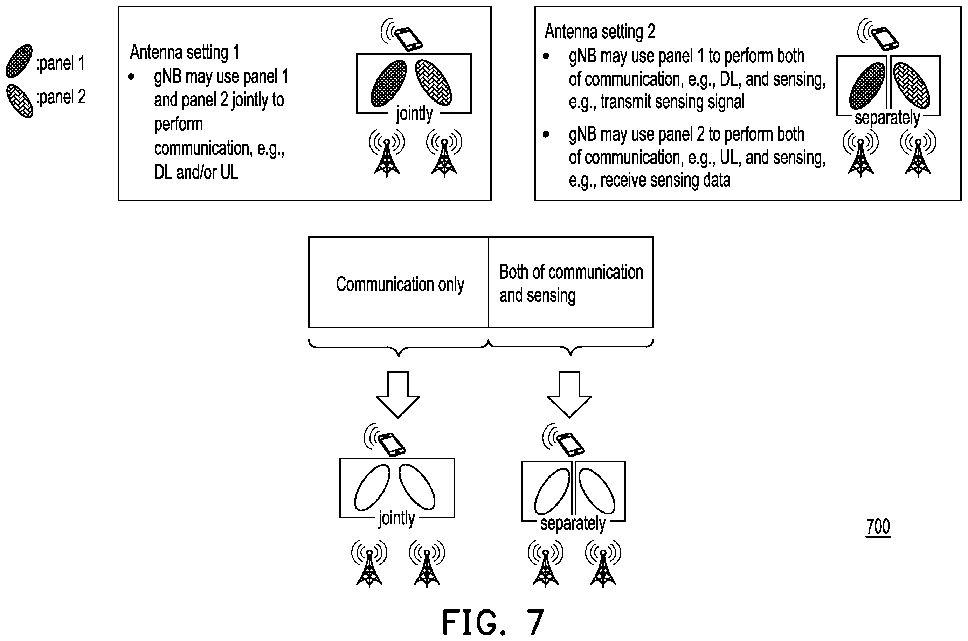

FIG. 7 illustrates a schematic diagram 700 of separate antenna settings for different symbol types according to one embodiment of the present disclosure. The antenna setting 1 may be applied to communication only. When the antenna setting 1 is applied, the gNB may use panel 1 and panel 2 jointly to perform DL transmission or UL reception. The antenna setting 2 may be applied to both of communication and sensing. When the antenna setting 2 is applied, the gNB may use panel 1 to perform both of communication (e.g., DL transmission) and sensing (e.g., transmitting sensing signal), or the gNB may use panel 2 to perform both of communication (e.g., UL reception) and sensing (e.g., receiving sensing signal).

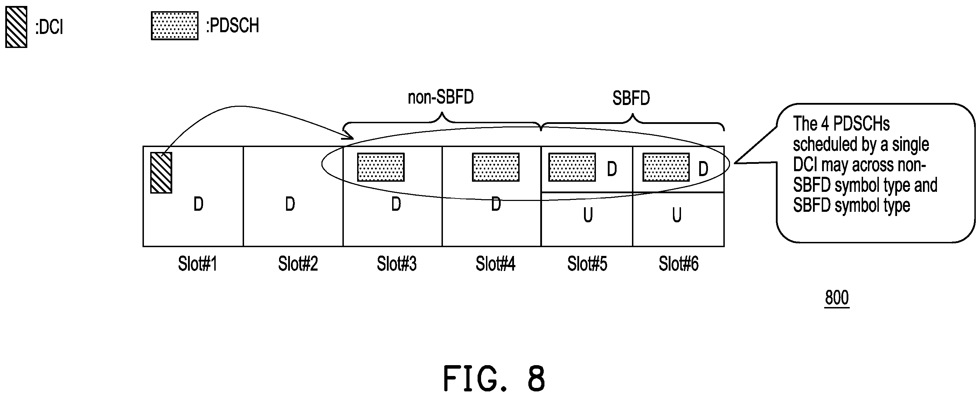

FIG. 8 illustrates a schematic diagram 800 of DL reception across different symbol types according one embodiment of the present disclosure. Multi-PDSCHs scheduled by a single DCI may across non-SBFD symbol type and SBFD symbol type. For UL transmissions or DL receptions across SBFD symbols and non-SBFD symbols in different slots (each transmission/reception within a slot has either all SBFD or all non-SBFD symbols), a SBFD-aware UE may be provided with one of the following configurations: configuration 1: the transmissions/receptions could be in SBFD symbols and non-SBFD symbols, as shown in FIG. 8; and configuration 2: the transmissions/receptions may be restricted to SBFD symbols only or non-SBFD symbols only. The configuration 1 may inform the UE to receive the multi-PDSCHs across different symbol types. The configuration 2 may inform the UE not to receive the multi-PDSCHs across different symbol types.

In one embodiment, the configuration provided to the SBFD-aware UE may be associated with UE's capability. For example, if UE reports a capability of *acorssTwoSymType* to the network, the network may configure the configuration 1 to the UE. The UE may perform UL transmissions across SBFD symbol type and non-SBFD symbol type based on the configuration 1, or the UE may perform DL reception across SBFD symbol type and non-SBFD symbol type based on the configuration 1.

In one embodiment, the configuration (e.g., configuration 1 or 2) may be configured for DL receptions and UL transmission, respectively. For example, if UE reports a capability of *acorssTwoSymTypeUL* to the network, the network may configure the configuration 1 to the UE for UL transmissions. The UE may perform UL transmissions across SBFD symbol type and non-SBFD symbol type based on the configuration 1. For example, if the UE reports a capability of *acorssTwoSymTypeDL* to the network, the network may configure the configuration 1 to the UE for DL receptions. The UE may perform DL receptions across SBFD symbol type and non-SBFD symbol type based on the configuration 1.

In one embodiment, configuration 1 or configuration 2 may be configured for a specific transmission/reception type such as higher layer configured UL/DL transmissions/receptions. In one embodiment, for dynamic scheduled UL/DL transmissions/receptions, the UE may perform the UL/DL transmissions/receptions across SBFD symbol type and non-SBFD symbol type (if any) by default.

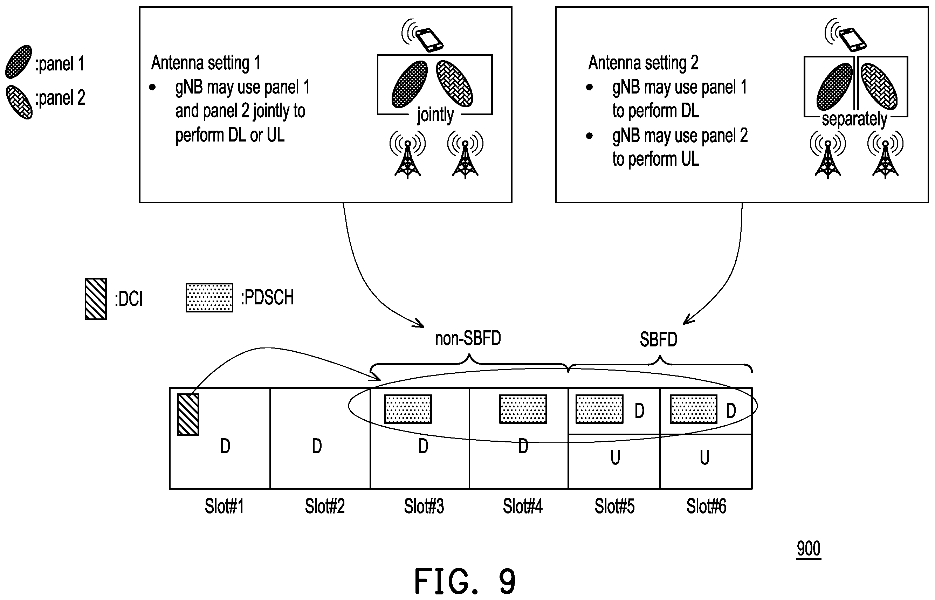

FIG. 9 illustrates a schematic diagram 900 of a possible issue for SBFD operation according to one embodiment of the present disclosure. In one embodiment, the UE may use the same QCL assumption to receive multi-PDSCHs across different symbol types such as the non-SBFD symbol type and the SBFD symbol type. However, the gNB may use different antenna settings for the non-SBFD symbol and the SBFD symbol respectively. The efficiency of the multi-PDSCHs reception may be reduced if the UE uses only a single QCL assumption to receive the multi-PDSCHs.

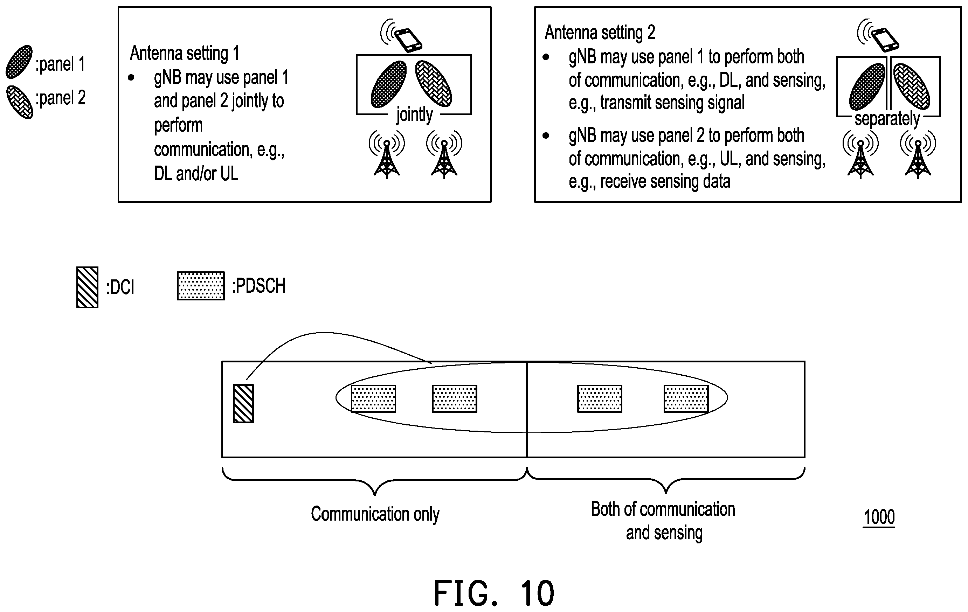

FIG. 10 illustrates a schematic diagram 1000 of a possible issue for ISAC operation according to one embodiment of the present disclosure. In one embodiment, the UE may use the same QCL assumption to receive multi-PDSCHs across different symbol types such as the symbol for communication only and the symbol for both of communication and sensing. However, the gNB may use different antenna settings for different symbol types respectively. The efficiency of the multi-PDSCHs reception may be reduced if the UE uses only a single QCL assumption to receive the multi-PDSCHs.

In one embodiment, the UE may determine separate QCL assumptions for multi-PDSCHs reception in different symbol types.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the UE receives the DCI in the first symbol type, the UE may use the QCL assumption of the DCI reception to receive the first set of PDSCHs, and the UE may use the QCL assumption indicated by the DCI to receive the second set of PDSCHs. If the UE receives the DCI in the second symbol type, the UE may use the QCL assumption of the DCI reception to receive the second set of PDSCHs, and the UE may use the QCL assumption indicated by the DCI to receive the first set of PDSCHs.

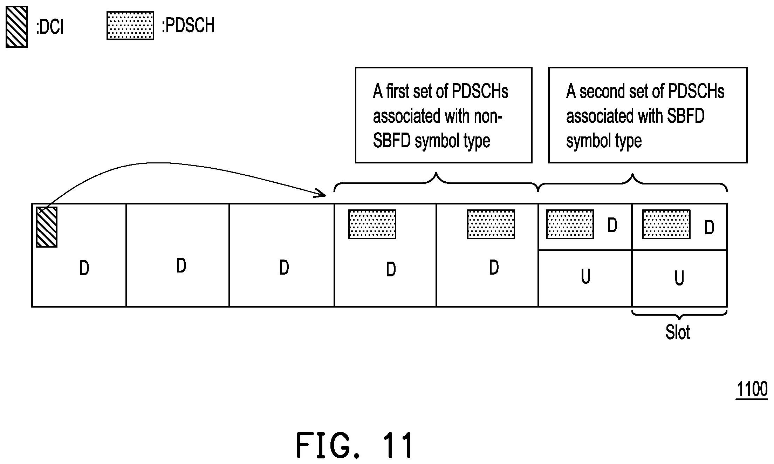

FIG. 11 illustrates a schematic diagram 1100 of multi-PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the UE has received a DCI by a first QCL assumption in non-SBFD symbol type, the UE may use the first QCL assumption to receive the first set of PDSCHs, and the UE may use a second QCL assumption to receive the second set of PDSCHs, wherein the second QCL assumption is indicated by the DCI. The second QCL assumption may be the same as or different from the first QCL assumption.

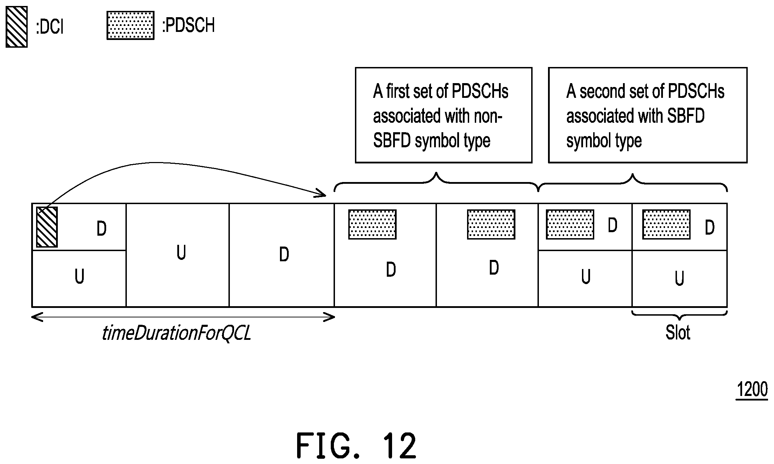

FIG. 12 illustrates a schematic diagram 1200 of multi-PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the UE has received a DCI by a first QCL assumption in SBFD symbol type, the UE may use the first QCL assumption to receive the second set of PDSCHs, and the UE may use a second QCL assumption to receive the first set of PDSCHs, wherein the second QCL assumption is indicated by the DCI. The second QCL assumption may be the same as or different from the first QCL assumption.

In one embodiment, a UE may be scheduled with a multi-PDSCHs reception by a DCI, and a PDSCH scheduling offset for a set of PDSCHs of the multi-PDSCHs may be greater than or equal to *timeDurationForQCL.* The set of PDSCHs may be associated with one specific symbol type. If the UE receives the DCI in the specific symbol type, the UE may use the QCL assumption of the DCI reception to receive the set of PDSCHs. The UE may ignore the TCI field in the DCI. If the UE receives the DCI in other symbol type, the UE may use the QCL assumption indicated by the DCI to receive the set of PDSCHs, wherein the QCL assumption may be indicated by the TCI field of the DCI.

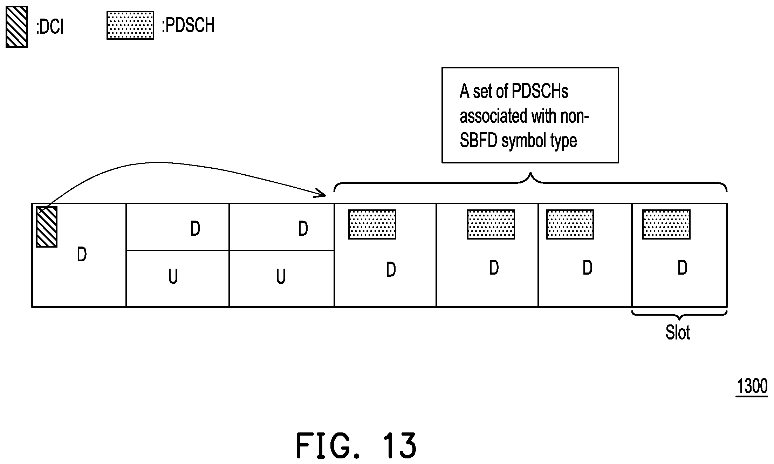

FIG. 13 illustrates a schematic diagram 1300 of multi-PDSCHs reception according to one embodiment of the present disclosure, wherein a set of PDSCHs is associated with the non-SBFD symbol type. Since the UE has received a DCI in non-SBFD symbol type, the UE may use the QCL assumption of the DCI reception to receive the set of PDSCHs.

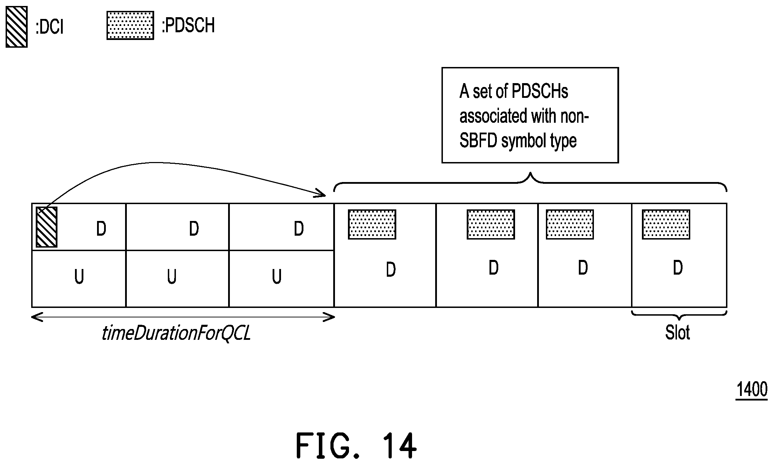

FIG. 14 illustrates a schematic diagram 1400 of multi-PDSCHs reception according to one embodiment of the present disclosure, wherein a set of PDSCHs is associated with the non-SBFD symbol. Since the UE has received a DCI in SBFD symbol type, the UE may use the QCL assumption indicated by the DCI to receive the set of PDSCHs.

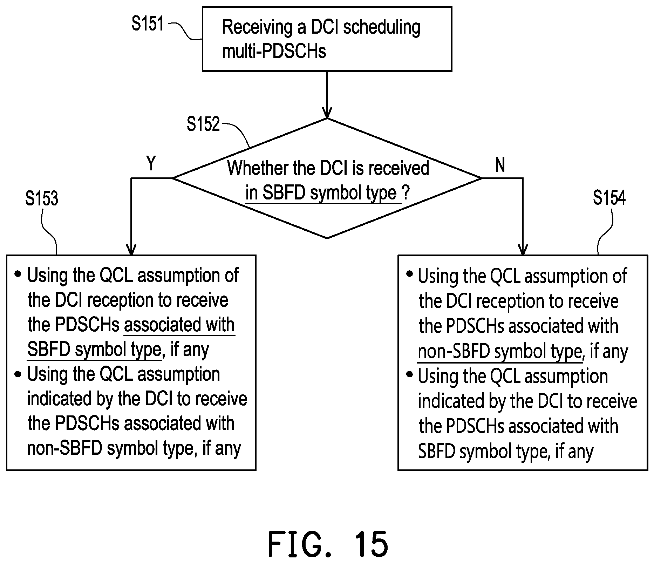

FIG. 15 illustrates a flowchart of selection of QCL assumption according to one embodiment of the present disclosure. In step S151, the UE may receive a DCI scheduling multi-PDSCHs. In step S152, the UE may determine whether the DCI is received in SBFD symbol type. If the DCI is received in SBFD symbol type, the UE may execute step S153. If the DCI is not received in SBFD symbol type (e.g., DCI is received in non-SBFD symbol type), the UE may execute step S154. In step S153, the UE may use the QCL assumption of the DCI reception to receive the PDSCHs associated with the SBFD symbol type (if any). The UE may use the QCL assumption indicated by the DCI to receive the PDSCHs associated with the non-SBFD symbol type (if any). In step S154, the UE may use the QCL assumption of the DCI reception to receive the PDSCHs associated with the non-SBFD symbol type (if any). The UE may use the QCL assumption indicated by the DCI to receive the PDSCHs associated with the SBFD symbol type (if any).

In one embodiment, a UE may be scheduled with a multi-PDSCHs reception by a DCI, and a PDSCH scheduling offset for a set of PDSCHs of the multi-PDSCHs may be greater than or equal to *timeDurationForQCL.* The set of PDSCHs may be associated with one symbol type, and the QCL assumption indicated by the DCI may be used to receive the set of PDSCHs. The symbol type of the DCI may be the same as or different from the symbol type of the set of PDSCHs.

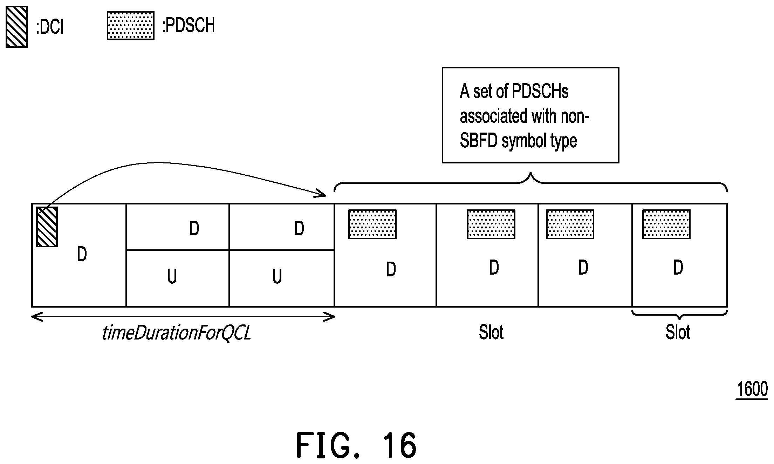

FIG. 16 illustrates a schematic diagram 1600 of multi-PDSCHs reception according to one embodiment of the present disclosure, wherein a set of PDSCHs is associated with the non-SBFD symbol type only. The UE may use the QCL assumption indicated by the DCI to receive the set of PDSCHs.

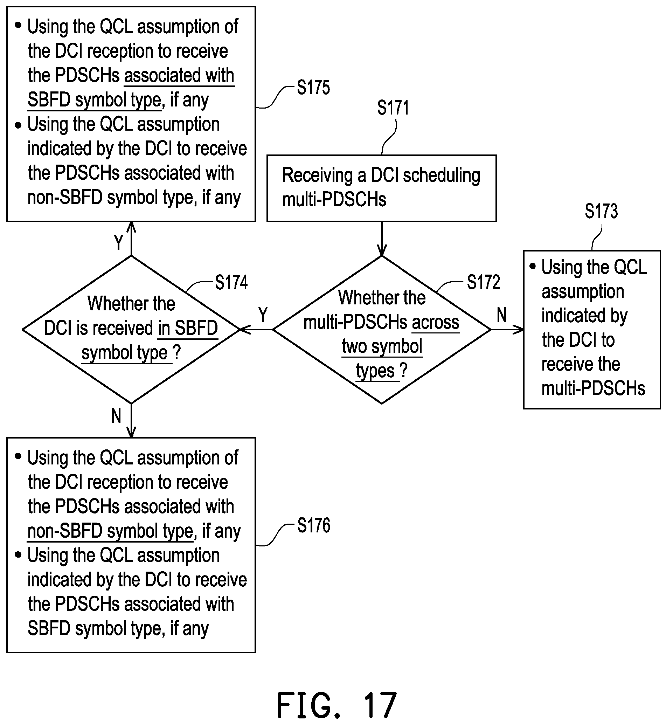

FIG. 17 illustrates a flowchart of selection of QCL assumption according to one embodiment of the present disclosure. In step S171, the UE may receive a DCI scheduling multi-PDSCHs. In step S172, the UE may determine whether the multi-PDSCHs is across two symbol types. If the multi-PDSCHs is across two symbol types, the UE may execute step S174. If the multi-PDSCHs is not across two symbol types, the UE may execute step S173. In step S173, the UE may use the QCL assumption indicated by the DCI to receive the multi-PDSCHs. In step S174, the UE may determine whether the DCI is received in SBFD symbol type. If the DCI is received in SBFD symbol type, the UE may execute step S175. If the DCI is not received in SBFD symbol type (e.g., DCI is received in non-SBFD symbol type), the UE may execute step S176. In step S175, the UE may use the QCL assumption of the DCI reception to receive the PDSDHs associated with the SBFD symbol type (if any). The UE may use the QCL assumption indicated by the DCI to receive the PDSCHs associated with the non-SBFD symbol type (if any). In step S176, the UE may use the QCL assumption of the DCI reception to receive the PDSCHs associated with the non-SBFD symbol type (if any). The UE may use the QCL assumption indicated by the DCI to receive the PDSCHs associated with the SBFD symbol type (if any).

In one embodiment, the UE may assume that the demodulation reference signal (DM-RS) ports of a serving cell may be quasi co-located with one or more reference signals (RS), wherein the RSs may be associated with the QCL parameters used for the DCI quasi co-location indication of a control resource set (CORESET). The CORESET may be associated with a monitored search space with the lowest *controlResourceSetID* in the last slot, wherein one or more CORESETs within an active bandwidth part (BWP) of the serving cell in the last slot may be monitored by the UE.

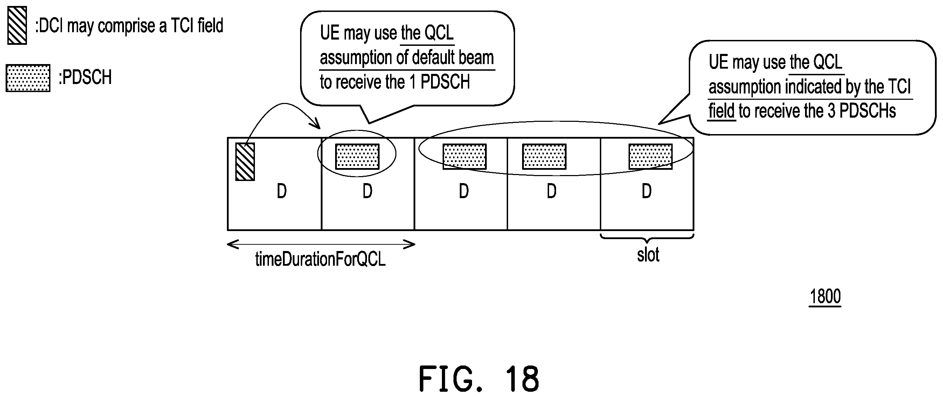

FIG. 18 illustrates a schematic diagram 1800 of PDSCHs reception according to one embodiment of the present disclosure. The UE may determine whether a time offset (e.g., PDSCH scheduling offset) between the DCI and the PDSCH resource indicated by the DCI is greater than or equal to *timeDurationForQCL.* Since the time offset corresponding to the first PDSCH is less than *timeDurationForQCL,* the UE may use the QCL assumption of the default beam to receive the first PDSCH. Since the time offset corresponding to the second PDSCH (or third or fourth PDSCH) is greater than or equal to *timeDurationForQCL,* the UE may use the QCL assumption indicated by the TCI field of the DCI to receive the second PDSCH (or third or fourth PDSCH).

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the UE receives the DCI in the first symbol type, the QCL assumption indicated by the DCI may be used to receive the first set of PDSCHs, and the QCL assumption of default beam may be used to receive the second set of PDSCHs. If the UE receives the DCI in the second symbol type, the QCL assumption indicated by the DCI may be used to receive the second set of PDSCHs, and the QCL assumption of default beam may be used to receive the first set of PDSCHs.

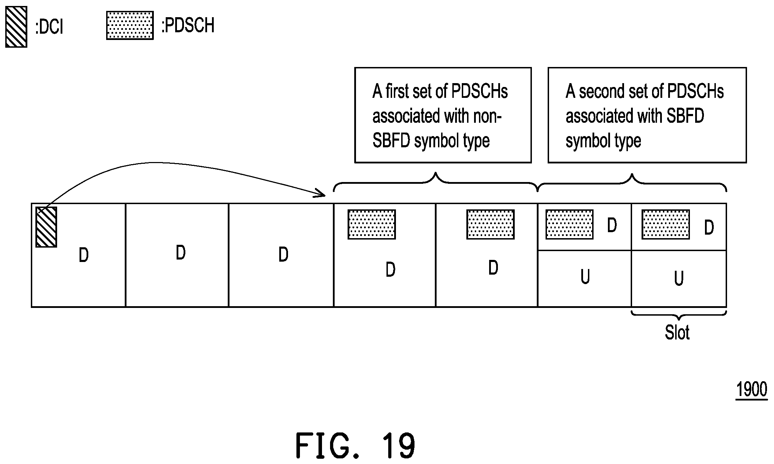

FIG. 19 illustrates a schematic diagram 1900 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the UE has received a DCI in non-SBFD symbol type, the UE may use the QCL assumption indicated by the DCI to receive the first set of PDSCHs, and the UE may use the QCL assumption of default beam to receive the second set of PDSCHs.

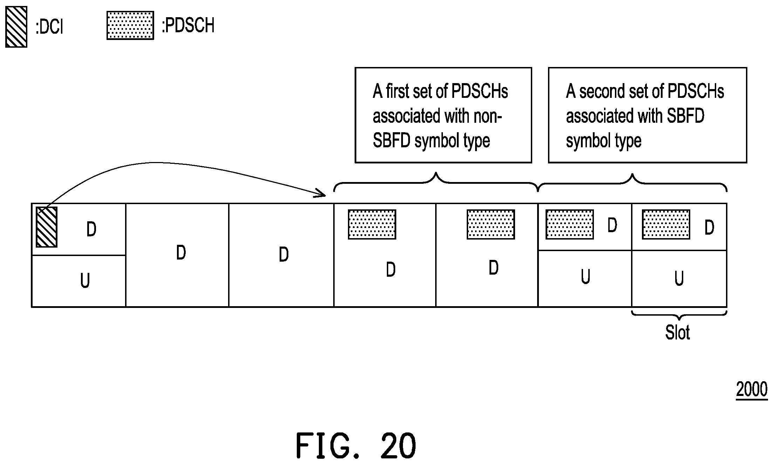

FIG. 20 illustrates a schematic diagram 2000 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the UE has received a DCI in SBFD symbol type, and the UE may use the QCL assumption indicated by the DCI to receive the second set of PDSCHs, the UE may use the QCL assumption of default beam to receive the first set of PDSCHs.

In one embodiment, a UE may be scheduled with a multi-PDSCHs reception by a DCI, and the multi-PDSCHs may be associated with one specific symbol type. If the UE receives the DCI in the specific symbol type, the UE may use the QCL assumption indicated by the DCI to receive the multi-PDSCHs. If the UE receives the DCI in other symbol type, the UE may use the QCL assumption of default beam to receive the multi-PDSCHs. The UE may ignore the TCI field in the DCI.

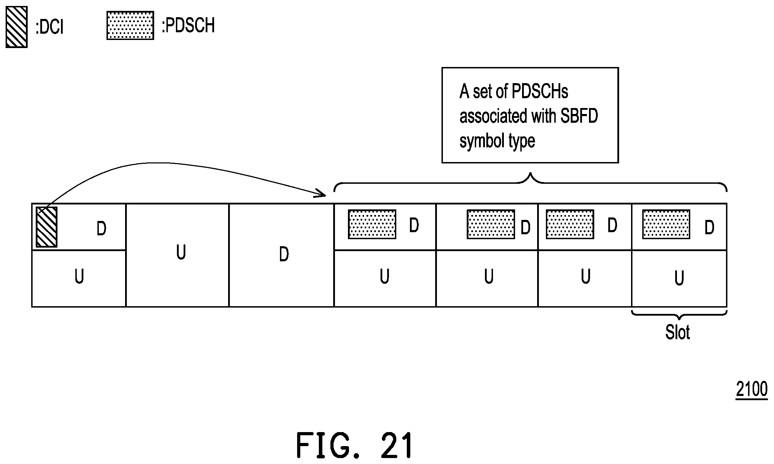

FIG. 21 illustrates a schematic diagram 2100 of PDSCHs reception according to one embodiment of the present disclosure, wherein a set of PDSCHs is associated with the SBFD symbol type. Assume that the UE has received a DCI in the SBFD symbol type. Since the DCI and the multi-PDSCHs are associated with the same symbol type, the UE may use the QCL assumption indicated by the DCI to receive the multi-PDSCHs.

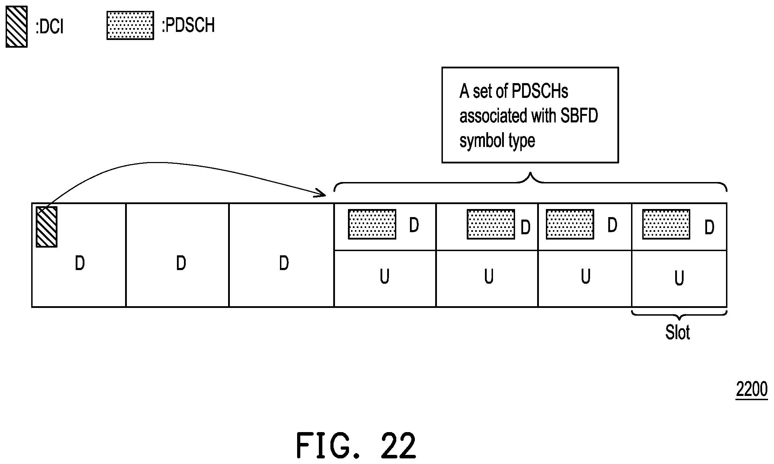

FIG. 22 illustrates a schematic diagram 2200 of PDSCHs reception according to one embodiment of the present disclosure, wherein a set of PDSCHs is associated with the SBFD symbol type. Assume that the UE has received a DCI in the non-SBFD symbol type. Since the DCI and the multi-PDSCHs are associated with different symbol types, the UE may use the QCL assumption of default beam to receive the multi-PDSCHs.

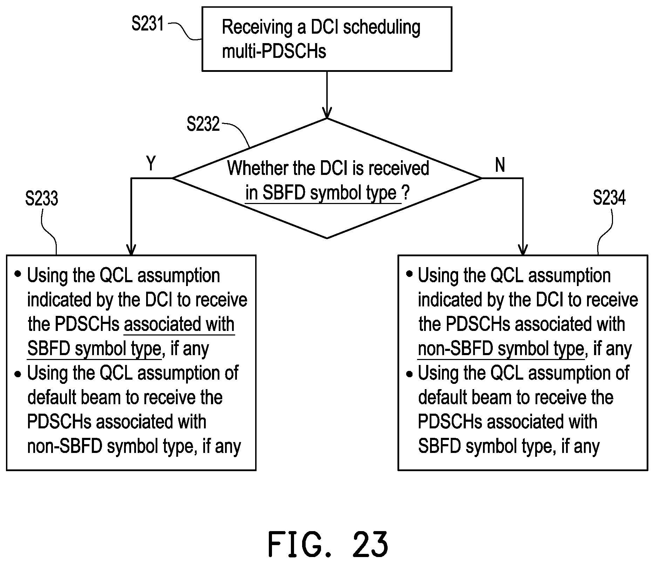

FIG. 23 illustrates a flowchart of selection of QCL assumption according to one embodiment of the present disclosure. In step S231, the UE may receive a DCI scheduling multi-PDSCHs. In step S232, the UE may determine whether the DCI is received in the SBFD symbol type. If the DCI is received in the SBFD symbol type, the UE may execute step S233. If the DCI is not received in the SBFD symbol type (e.g., DCI is received in the non-SBFD symbol type), the UE may execute step S234. In step S233, the UE may use the QCL assumption indicated by the DCI to receive the PDSCHs associated with the SBFD symbol type (if any). The UE may use the QCL assumption of default beam to receive the PDSCHs associated with the non-SBFD symbol type (if any). In step S244, the UE may use the QCL assumption indicated by the DCI to receive the PDSCHs associated with the non-SBFD symbol type (if any). The UE may use the QCL assumption of default beam to receive the PDSCHs associated with the SBFD symbol type (if any).

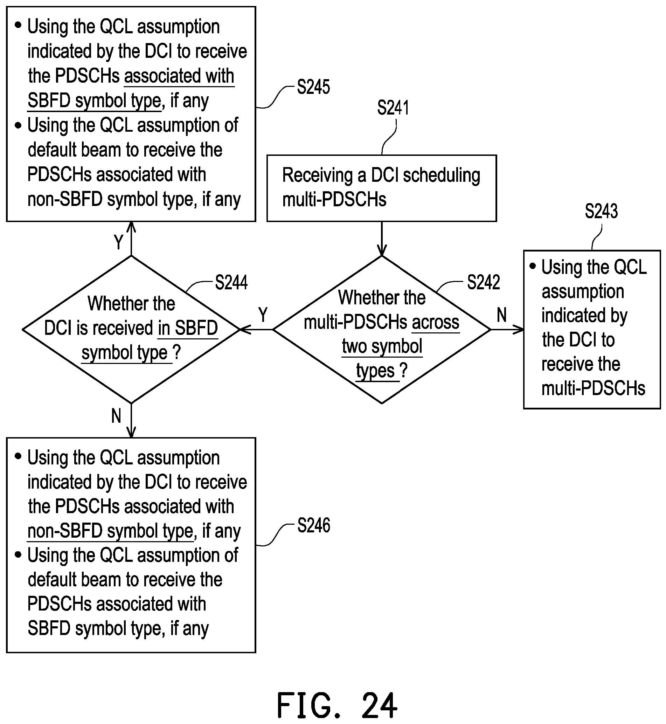

FIG. 24 illustrates a flowchart of selection of QCL assumption according to one embodiment of the present disclosure. In step S241, the UE may receive a DCI scheduling multi-PDSCHs. In step S242, the UE may determine whether the multi-PDSCHs is across two symbol types. If the multi-PDSCHs is across two symbol types, the UE may execute step S244. If the multi-PDSCHs is not across two symbol types, the UE may execute step S243. In step S243, the UE may use the QCL assumption indicated by the DCI to receive the multi-PDSCHs. In step S244, the UE may determine whether the DCI is received in SBFD symbol type. If the DCI is received in SBFD symbol type, the UE may execute step S245. If the DCI is not received in SBFD symbol type (e.g., DCI is received in non-SBFD symbol type), the UE may execute step S246. In step S245, the UE may use the QCL assumption indicated by the DCI to receive the PDSDHs associated with the SBFD symbol type (if any). The UE may use the QCL assumption of default beam to receive the PDSCHs associated with the non-SBFD symbol type (if any). In step S246, the UE may use the QCL assumption indicated by the DCI to receive the PDSCHs associated with the non-SBFD symbol type (if any). The UE may use the QCL assumption of default beam to receive the PDSCHs associated with the SBFD symbol type (if any).

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the first symbol type is SBFD symbol type, the QCL assumption indicated by the DCI may be used to receive the first set of PDSCHs, and the QCL assumption of default beam may be used to receive the second set of PDSCHs. If the second symbol type is SBFD symbol type, the QCL assumption indicated by the DCI may be used to receive the second set of PDSCHs, and the QCL assumption of default beam may be used to receive the first set of PDSCHs.

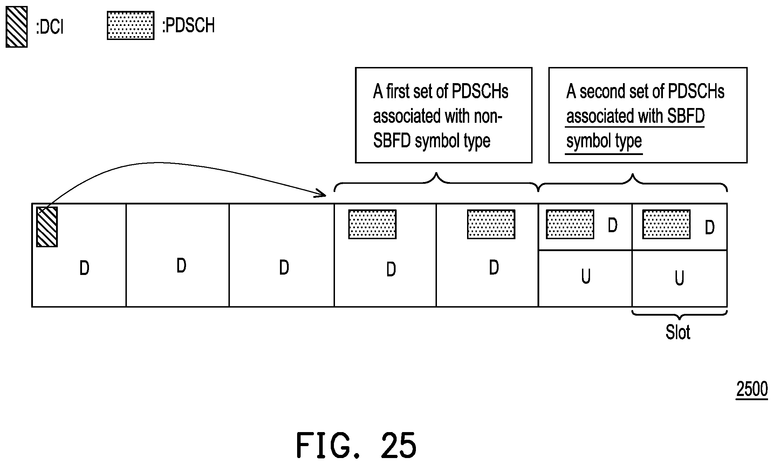

FIG. 25 illustrates a schematic diagram 2500 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Assume that the UE has received a DCI in non-SBFD symbol type. Since the first set of PDSCHs is associated with the non-SBFD symbol type, the UE may use the QCL assumption of default beam to receive the first set of PDSCHs. Since the second set of PDSCHs is associated with the SBFD symbol type, the UE may use the QCL assumption indicated by the DCI to receive the second set of PDSCHs

In one embodiment, a UE may be scheduled with a multi-PDSCHs reception by a DCI, and a PDSCH scheduling offset for a set of PDSCHs of the multi-PDSCHs may be greater than or equal to *timeDurationForQCL,* wherein the set of PDSCHs may be associated with one specific symbol type. If the specific symbol type is the non-SBFD symbol type, the QCL assumption of default beam may be used to receive the set of PDSCHs. The UE may ignore the TCI field in the DCI. If the specific symbol type is the SBFD symbol type, the QCL assumption indicated by the DCI may be used to receive the set of PDSCHs.

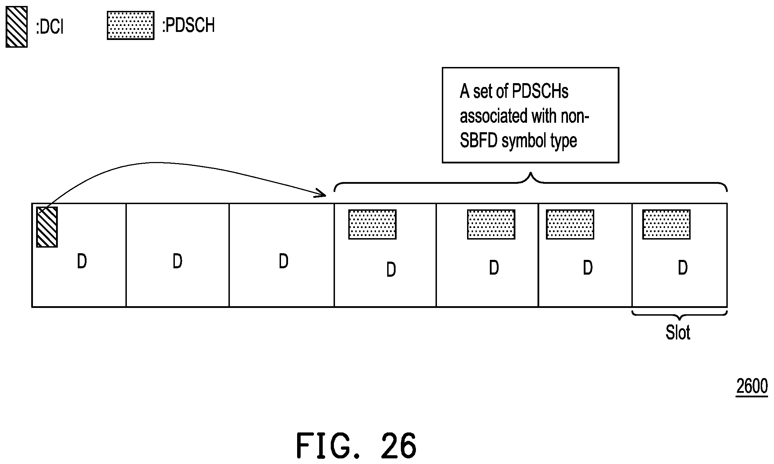

FIG. 26 illustrates a schematic diagram 2600 of PDSCHs reception according to one embodiment of the present disclosure, wherein a set of PDSCHs is associated with the non-SBFD symbol type. Assume that the UE has received a DCI in the non-SBFD symbol type. Since the set of PDSCHs is associated with the non-SBFD symbol type, the UE may use the QCL assumption of default beam to receive the set of PDSCHs.

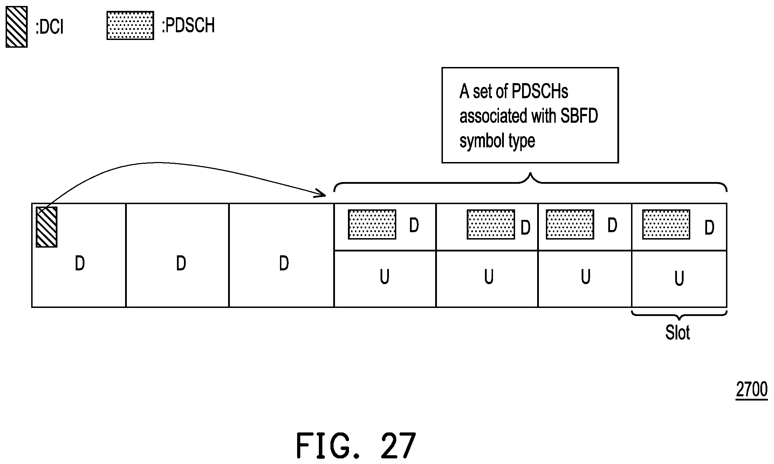

FIG. 27 illustrates a schematic diagram 2700 of PDSCHs reception according to one embodiment of the present disclosure, wherein a set of PDSCHs is associated with the SBFD symbol type. Assume that the UE has received a DCI in the non-SBFD symbol type. Since the set of PDSCHs is associated with the SBFD symbol type, the UE may use the QCL assumption indicated by the DCI to receive the set of PDSCHs.

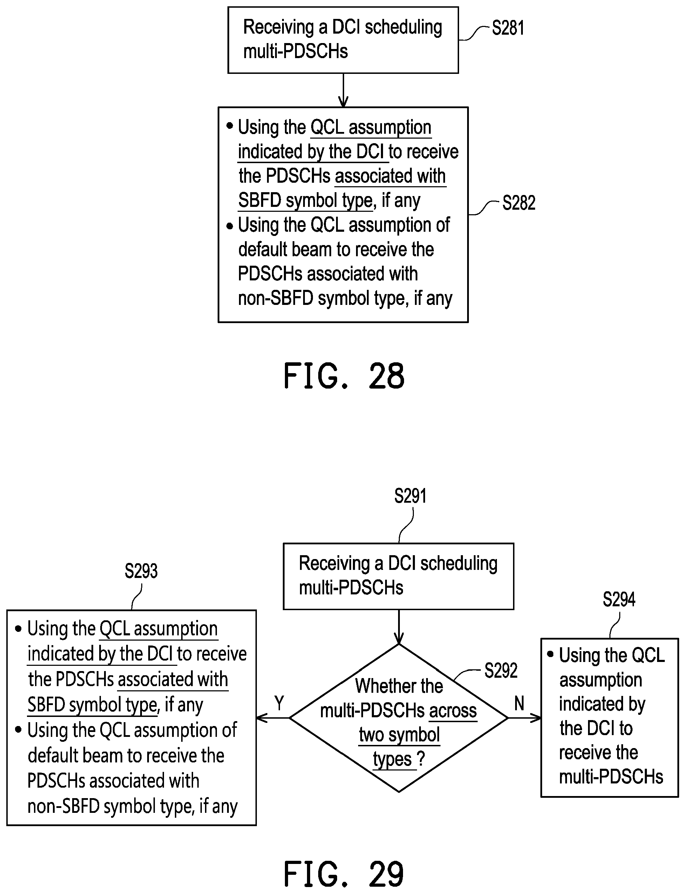

FIG. 28 illustrates a flowchart of selection of QCL assumption according to one embodiment of the present disclosure. In step S281, the UE may receive a DCI scheduling multi-PDSCHs. In step S282, the UE may use the QCL assumption indicated by the DCI to receive the PDSCHs associated with SBFD symbol type (if any). The UE may use the QCL assumption of default beam to receive the PDSCHs associated with non-SBFD symbol type (if any).

FIG. 29 illustrates a flowchart of selection of QCL assumption according to one embodiment of the present disclosure. In step S291, the UE may receive a DCI scheduling multi-PDSCHs. In step S292, the UE may determine whether the multi-PDSCHs is across two symbol types. If the multi-PDSCHs is across two symbol types, the UE may execute step S293. If the multi-PDSCHs is not across two symbol types, the UE may execute step S294. In step S293, the UE may use the QCL assumption indicated by the DCI to receive the PDSCHs associated with the SBFD symbol type (if any). The UE may use the QCL assumption of default beam to receive the PDSCHs associated with the non-SBFD symbol type (if any). In step S294, the UE may use the QCL assumption indicated by the DCI to receive the multi-PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. The first one of the first set of PDSCHs may be closer to the DCI than the first one of the second set of PDSCHs. That is, a time interval between the DCI and the first one of the first set of PDSCHs may be less than a time interval between the DCI and the first one of the second set of PDSCHs. The QCL assumption of default beam may be used to receive the first set of PDSCHs. The QCL assumption indicated by the DCI may be used to receive the second set of PDSCHs.

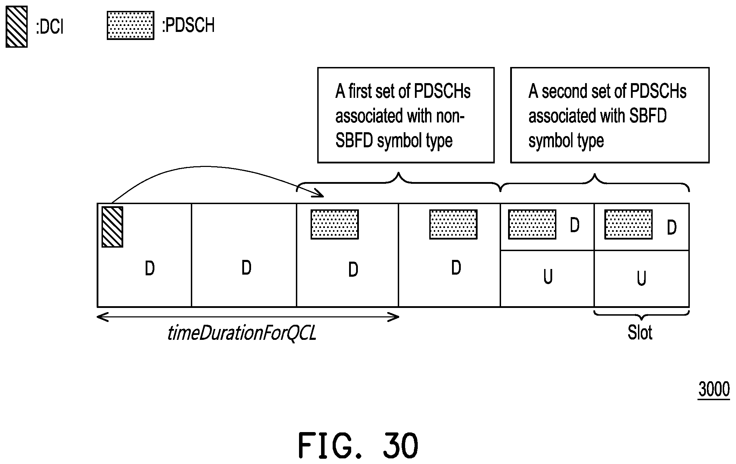

FIG. 30 illustrates a schematic diagram 3000 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the first one of the first set of PDSCHs is closer to the DCI, the UE may use QCL assumption of default beam to receive the first set of PDSCHs. Since the first one of the second set of PDSCHs is farther to the DCI, the UE may use QCL assumption indicated by the DCI to receive the second set of PDSCHs.

In one embodiment, a UE may be scheduled with a multi-PDSCHs reception by a DCI, and a PDSCH scheduling offset for a set of PDSCHs of the multi-PDSCHs may be greater than or equal to *timeDurationForQCL,* wherein the set of PDSCHs may be associated with one specific symbol type. The QCL assumption of default beam may be used to receive the set of PDSCHs. The UE may ignore the TCI field in the DCI.

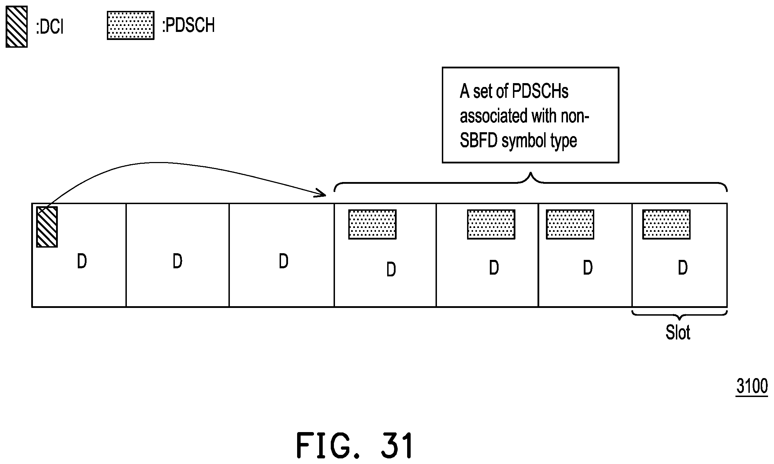

FIG. 31 illustrates a schematic diagram 3100 of PDSCHs reception according to one embodiment of the present disclosure, wherein a set of PDSCHs is associated with the non-SBFD symbol type. Assume that the UE has received a DCI in the non-SBFD symbol type. Since the set of PDSCHs is associated with the non-SBFD symbol type, the UE may use the QCL assumption of default beam to receive the set of PDSCHs.

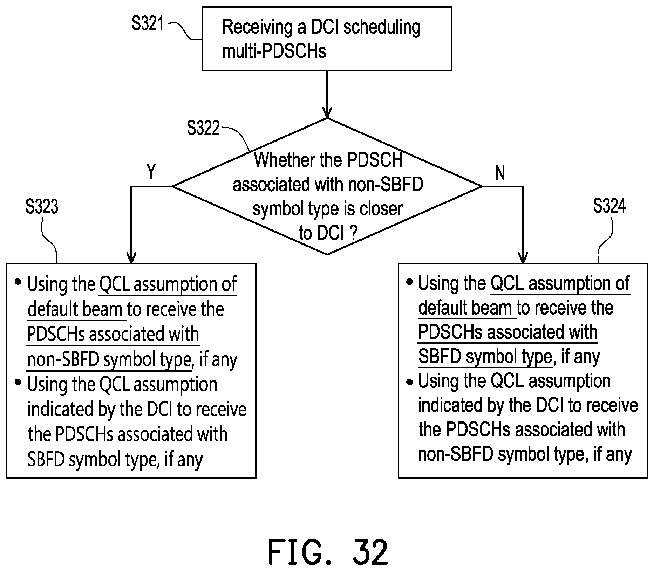

FIG. 32 illustrates a flowchart of selection of QCL assumption according to one embodiment of the present disclosure. In step S321, the UE may receive a DCI scheduling multi-PDSCHs, wherein the multi-PDSCHs may include PDSCHs associated with SBFD symbol type and non-SBFD symbol type respectively. In step S322, the UE may determine whether the PDSCH associated with the non-SBFD symbol type is closer to the DCI. If the PDSCH associated with the non-SBFD symbol type is closer to the DCI, the UE may execute step S323. If the PDSCH associated with the SBFD symbol type is closer to the DCI, the UE may execute step S324. In step S323, the UE may use the QCL assumption of default beam to receive the PDSCHs associated with the non-SBFD symbol type (if any). The UE may use the QCL assumption indicated by the DCI to receive the PDSCHs associated with the SBFD symbol type (if any). In step S324, the UE may use the QCL assumption of default beam to receive the PDSCHs associated with the SBFD symbol type (if any). The UE may use the QCL assumption indicated by the DCI to receive the PDSCHs associated with the non-SBFD symbol type (if any).

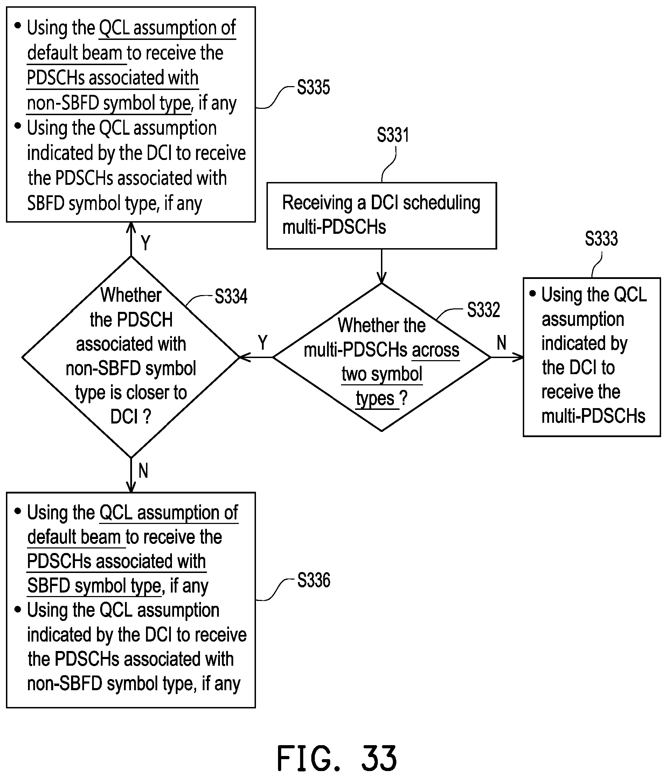

FIG. 33 illustrates a flowchart of selection of QCL assumption according to one embodiment of the present disclosure. In step S331, the UE may receive a DCI scheduling multi-PDSCHs. In step S332, the UE may determine whether the multi-PDSCHs is across two symbol types. If the multi-PDSCHs is across two symbol types, the UE may execute step S334. If the multi-PDSCHs is not across two symbol types, the UE may execute step S333. In step S333, the UE may use the QCL assumption indicated by the DCI to receive the multi-PDSCHs. In step S334, the UE may determine whether the PDSCH associated with the non-SBFD symbol is closer to the DCI. If the PDSCH associated with the non-SBFD symbol is closer to the DCI, the UE may execute step S335. If the PDSCH associated with the SBFD symbol is closer to the DCI, the UE may execute step S336. In step S335, the UE may use the QCL assumption of default beam to receive the PDSCHs associated with the non-SBFD symbol type (if any). The UE may use the QCL assumption indicated by the DCI to receive the PDSCHs associated with the SBFD symbol type (if any). In step S336, the UE may use the QCL assumption of default beam to receive the PDSCHs associated with the SBFD symbol type (if any). The UE may use the QCL assumption indicated by the DCI to receive the PDSCHs associated with the non-SBFD symbol type (if any).

A UE may be configured with a TCI state table, wherein the TCI state table may include N TCI states, where N is a positive integer. Some codepoints (e.g., first N/2 TCI states) of the TCI state table may be associated with the non-SBFD symbol type, and the other codepoints (e.g., last N/2 TCI states) of the TCI state table may be associated with the SBFD symbol type. The network or the UE may determine the bit length of the TCI field in a DCI based on the number of N TCI states or based on the number of N/2 TCI states. For example, the number of TCI states (e.g., N/2 TCI states) for the SBFD symbol type may be the same as the number of TCI states (e.g., N/2 TCI states) for the non-SBFD symbol type. If the number of TCI states N/2 for one symbol type is indicated to the UE, the UE may determine that the total numbers of TCI states for two symbol types is equal to N and the UE may determine the bit length of the TCI field accordingly.

Table 1 is an example of a TCI state table. The codepoints "00" and "01" may be associated with the non-SBFD symbol type. The codepoints "10" and "11" may be associated with the SBFD symbol type.

**Table 1**

| TCI field | TCI state identification (ID) |
|---|---|
| 00 | #A0 |
| 01 | #A1 |
| 10 | #B0 |
| 11 | #B1 |

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the codepoint of the TCI field in the DCI is associated with the first symbol type, the UE may use the QCL assumption corresponding to the codepoint to receive the first set of PDSCHs, and the UE may use the QCL assumption of default beam to receive the second set of PDSCHs. If the codepoint of the TCI field in the DCI is associated with the second symbol type, the UE may use the QCL assumption corresponding to the codepoint to receive the second set of PDSCHs, and the UE may use the QCL assumption of default beam to receive the first set of PDSCHs.

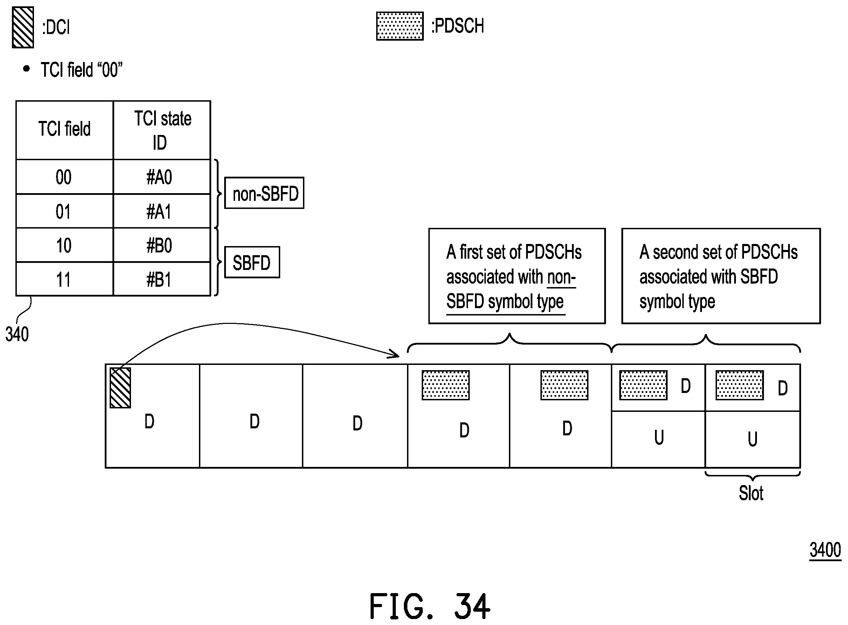

FIG. 34 illustrates a schematic diagram 3400 of PDSCHs reception according to one embodiment of the present disclosure, wherein a first set of PDSCHs is associated with the non-SBFD symbol type and a second set of PDSCHs associated with the SBFD symbol type. The UE may be configured with the TCI state table 340, wherein the TCI state table 340 include codepoints "00" and "01" corresponding to the non-SBFD symbol type and codepoints "10" and "11" corresponding to the SBFD symbol type. Assume that the UE has receive a DCI, wherein the TCI field of the DCI indicates codepoint "00" corresponding to the non-SBFD symbol type. Based on codepoint "00", the UE may use the QCL assumption corresponding to TCI state ID "#A0" to receive the first set of PDSCHs, and the UE may use the QCL assumption of default beam to receive the second set of PDSCHs.

In one embodiment, a UE may be scheduled with a multi-PDSCHs reception by a DCI, and a PDSCH scheduling offset for the multi-PDSCHs may be greater than or equal to *timeDurationForQCL,* wherein the multi-PDSCHs may be associated with one specific symbol type. The UE may not expect that the codepoint of the TCI state in the DCI is associated with other symbol type.

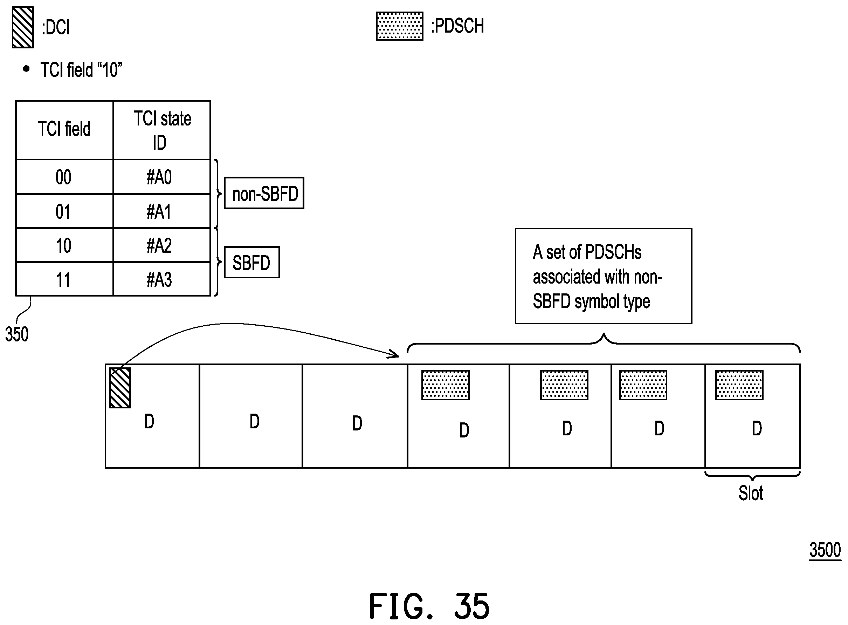

FIG. 35 illustrates a schematic diagram 3500 of PDSCHs reception according to one embodiment of the present disclosure, wherein a set of PDSCHs is associated with non-SBFD symbol type. The UE may be configured with the TCI state table 350, wherein the TCI state table 350 include codepoints "00" and "01" corresponding to the non-SBFD symbol type and codepoints "10" and "11" corresponding to the SBFD symbol type. Assume that the UE has receive a DCI, wherein the TCI field of the DCI indicates codepoint "10" corresponding to the SBFD symbol type. Since the set of PDSCHs is associated with non-SBFD symbol type, the UE may not expect that the codepoint of the TCI field in the DCI is associated with the SBFD symbol type. Therefore, the UE may not receive the set of PDSCHs by using the TCI state corresponding to the indicated codepoint (i.e., "10"). In one example, the UE may receive the set of PDSCHs by using the TCI state of default beam or by using the TCI state for receiving the DCI.

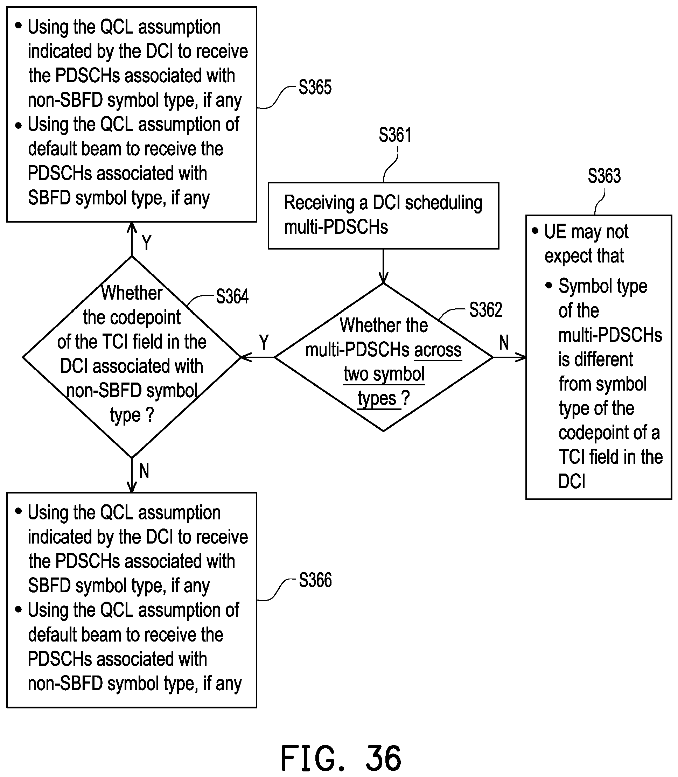

FIG. 36 illustrates a flowchart of selection of QCL assumption according to one embodiment of the present disclosure. In step S361, the UE may receive a DCI scheduling multi-PDSCHs. In step S362, the UE may determine whether the multi-PDSCHs is across two symbol types. If the multi-PDSCHs is across two symbol types, the UE may execute step S364. If the multi-PDSCHs is not across two symbol types, the UE may execute step S363. In step S363, the UE may not expect that the symbol type of the multi-PDSCHs is different from symbol type of the codepoint of a TCI field in the DCI. In step S364, the UE may determine whether the codepoint of the TCI field in the DCI is associated with the non-SBFD symbol type. If the codepoint is associated with the non-SBFD symbol type, the UE may execute step S365. If the codepoint is associated with the SBFD symbol type, the UE may execute step S366. In step S365, the UE may use the QCL assumption indicated by the DCI to receive the PDSCHs associated with the non-SBFD symbol type (if any). The UE may use the QCL assumption of default beam to receive the PDSCHs associated with the SBFD symbol type (if any). In step S366, the UE may use the QCL assumption indicated by the DCI to receive the PDSCHs associated with the SBFD symbol type (if any). The UE may use the QCL assumption of default beam to receive the PDSCHs associated with the non-SBFD symbol type (if any).

In one embodiment, a UE may be scheduled with a multi-PDSCHs reception by a DCI, and a PDSCH scheduling offset for the multi-PDSCHs may be greater than or equal to *timeDurationForQCL,* wherein the multi-PDSCHs may be associated with one specific symbol type. If the TCI state in the DCI is associated with other symbol type, the UE may use the QCL assumption of default beam to receive the multi-PDSCHs.

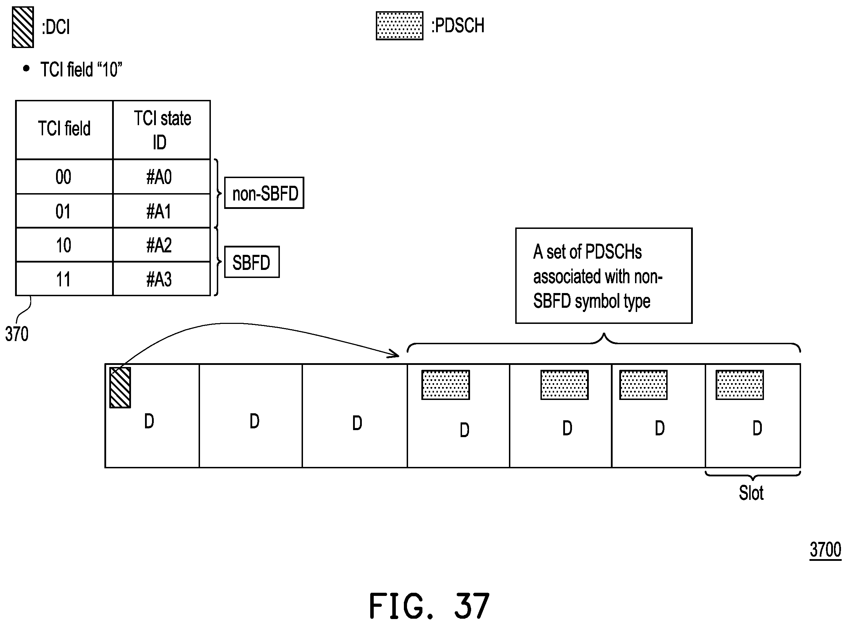

FIG. 37 illustrates a schematic diagram 3700 of PDSCHs reception according to one embodiment of the present disclosure, wherein a set of PDSCHs is associated with non-SBFD symbol type. The UE may be configured with the TCI state table 370, wherein the TCI state table 370 include codepoints "00" and "01" corresponding to the non-SBFD symbol type and codepoints "10" and "11" corresponding to the SBFD symbol type. Assume that the UE has receive a DCI, wherein the TCI field of the DCI indicates codepoint "10" corresponding to the SBFD symbol type. Since the TCI field indicated by the DCI is associated with the SBFD symbol type, the UE may use the QCL assumption of default beam to receive the set of PDSCHs.

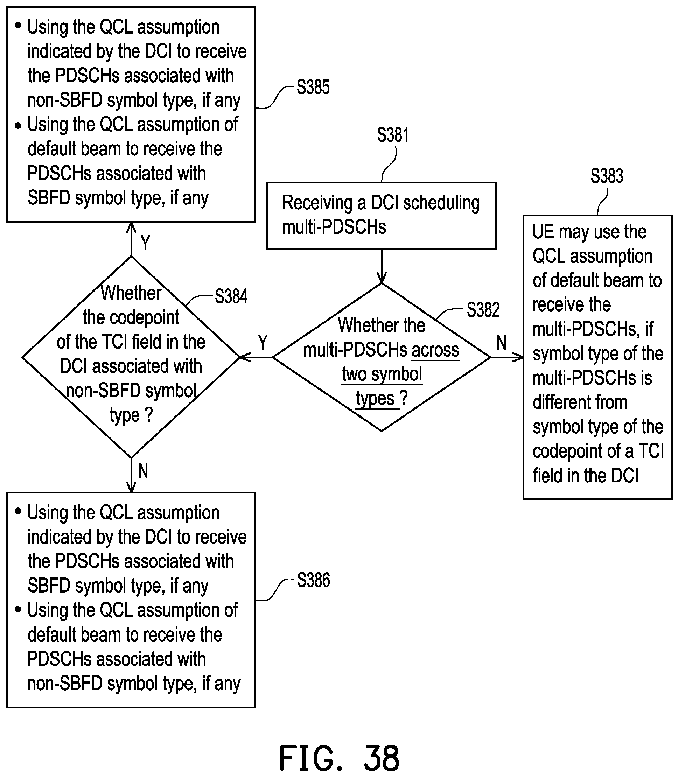

FIG. 38 illustrates a flowchart of selection of QCL assumption according to one embodiment of the present disclosure. In step S381, the UE may receive a DCI scheduling multi-PDSCHs. In step S382, the UE may determine whether the multi-PDSCHs is across two symbol types. If the multi-PDSCHs is across two symbol types, the UE may execute step S384. If the multi-PDSCHs is not across two symbol types, the UE may execute step S383. In step S383, if the symbol type of the multi-PDSCHs is different from the symbol type of the codepoint of a TCI field in the DCI, the UE may use the QCL assumption of default beam to receive the multi-PDSCHs. In step S384, the UE may determine whether the codepoint of the TCI field in the DCI is associated with the non-SBFD symbol type. If the codepoint is associated with the non-SBFD symbol type, the UE may execute step S385. If the codepoint is associated with the SBFD symbol type, the UE may execute step S386. In step S385, the UE may use the QCL assumption indicated by the DCI to receive the PDSCHs associated with the non-SBFD symbol type (if any). The UE may use the QCL assumption of default beam to receive the PDSCHs associated with the SBFD symbol type (if any). In step S386, the UE may use the QCL assumption indicated by the DCI to receive the PDSCHs associated with the SBFD symbol type (if any). The UE may use the QCL assumption of default beam to receive the PDSCHs associated with the non-SBFD symbol type (if any).

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the TCI field in the DCI may point to one or more codepoints (e.g., two codepoints), the first codepoint may be associated with the first symbol type, and the second codepoint may be associated with second symbol type. The UE may use the QCL assumption of the first codepoint to receive the first set of PDSCHs, and the UE may use the QCL assumption of the second codepoint to receive the second set of PDSCHs.

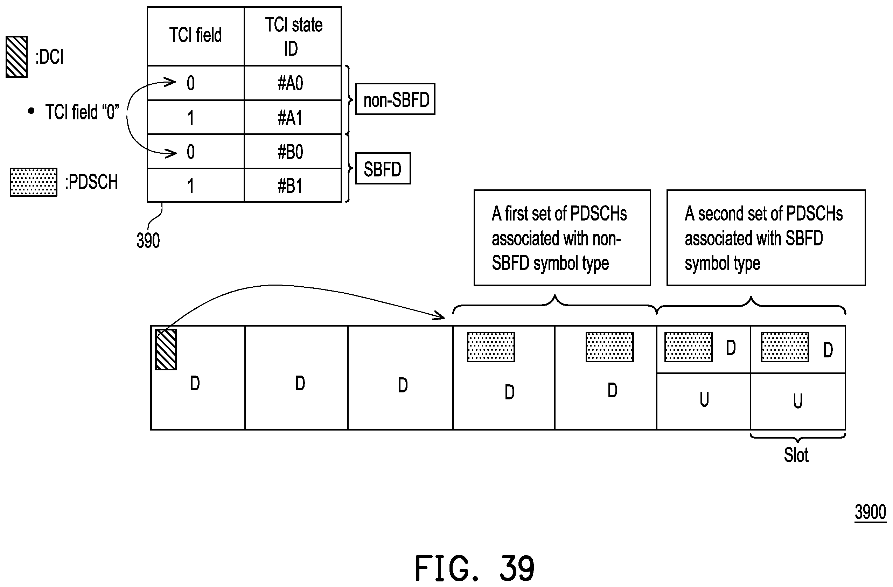

FIG. 39 illustrates a schematic diagram 3900 of PDSCHs reception according to one embodiment of the present disclosure, wherein a first set of PDSCHs is associated with the non-SBFD symbol type and a second set of PDSCHs is associated with the SBFD symbol type. The UE may be configured with the TCI state table 390, wherein the TCI state table 390 include codepoints "0" and "1", and each codepoint corresponds to both of the non-SBFD symbol type and the SBFD symbol type. For example, codepoint "0" indicates the TCI state ID "#A0" corresponding to the non-SBFD symbol type and the TCI state ID "#B0" corresponding to the SBFD symbol type, and codepoint "1" indicates the TCI state ID "#A1" corresponding to the non-SBFD symbol type and the TCI state ID "#B1" corresponding to the SBFD symbol type. Assume that the UE has received a DCI, wherein a codepoint of a TCI field in the DCI is "0". Based on codepoint "0", the UE may use the QCL assumption corresponding to TCI state ID "#A0" to receive the first set of PDSCHs, and the UE may use the QCL assumption corresponding to TCI state ID "#B0" to receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the number of PDSCHs of the first set of PDSCHs may be more than the number of PDSCHs of the second set of PDSCHs. The QCL assumption indicated by the DCI may be used to receive the first set of PDSCHs, and the QCL assumption of default beam may be used to receive the second set of PDSCHs.

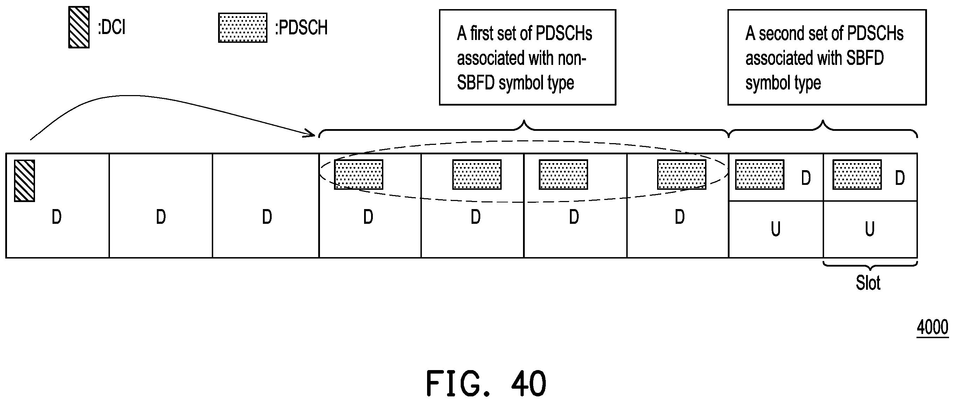

FIG. 40 illustrates a schematic diagram 4000 of PDSCHs reception according to one embodiment of the present disclosure, wherein a first set of PDSCHs is associated with the non-SBFD symbol type, and a second set of PDSCHs is associated with the SBFD symbol type, wherein the number of the first set of PDSCHs is greater than the number of the second set of PDSCHs. A PDSCH scheduling offset for the first set of PDSCHs and the second set of PDSCHs may be greater than or equal to *timeDurationForQCL.* Since the number of the first set of PDSCHs is greater than the number of the second set of PDSCHs, the UE may use QCL assumption indicated by the DCI to receive the first set of PDSCHs, and the UE may use QCL assumption of default beam to receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the number of PDSCHs of the first set of PDSCHs may be equal to the number of PDSCHs of the second set of PDSCHs. The UE could follow any embodiment in this disclosure to receive the first set of PDSCHs and the second set of PDSCHs.

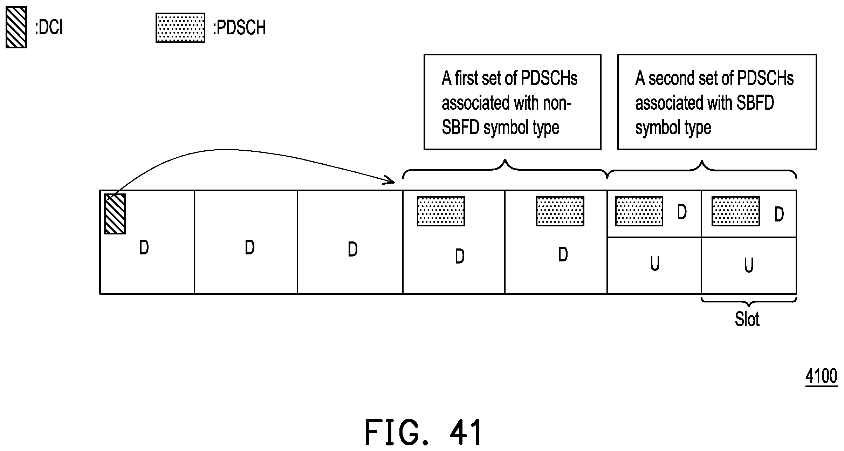

FIG. 41 illustrates a schematic diagram 4100 of PDSCHs reception according to one embodiment of the present disclosure, wherein a first set of PDSCHs is associated with the non-SBFD symbol type, and a second set of PDSCHs is associated with the SBFD symbol type, wherein the number of the first set of PDSCHs is equal to the number of the second set of PDSCHs. A PDSCH scheduling offset for the first set of PDSCHs and the second set of PDSCHs may be greater than or equal to *timeDurationForQCL.* Since the number of PDSCHs of the first set of PDSCHs is equal to the number of PDSCHs of the second set of PDSCHs, the UE may use QCL assumption of default beam to receive the first set of PDSCHs (e.g., first symbol type is non-SBFD symbol type), and the UE may use QCL assumption indicated by the DCI to receive the second set of PDSCHs (e.g., second symbol type is SBFD symbol type).

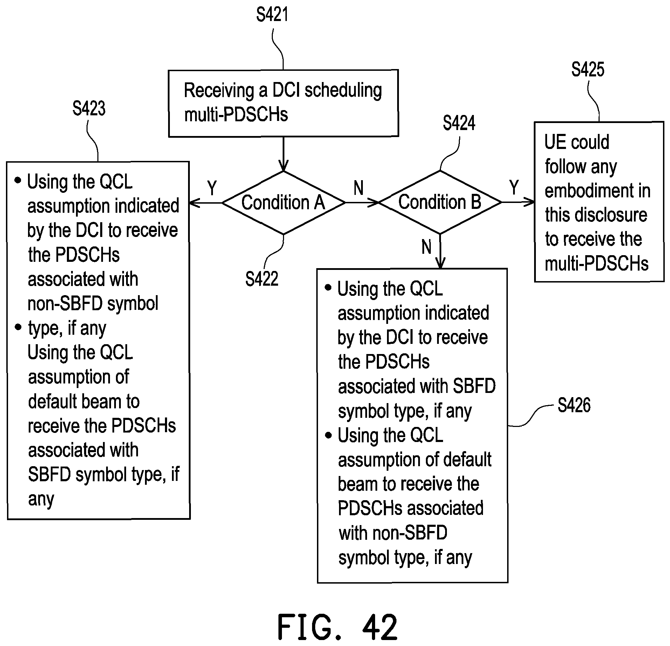

FIG. 42 illustrates a flowchart of selection of QCL assumption according to one embodiment of the present disclosure. In step S421, the UE may receive a DCI scheduling multi-PDSCHs. In step S422, the UE may determine whether condition A is met. Specifically, the UE may determine whether the number of PDSCHs associated with the non-SBFD symbol type is greater than the number of PDSCHs associated with the SBFD symbol type. If the number of PDSCHs associated with the non-SBFD symbol type is greater than the number of PDSCHs associated with the SBFD symbol type, the UE may determine condition A is met and execute step S423. If the number of PDSCHs associated with the non-SBFD symbol type is less than the number of PDSCHs associated with the SBFD symbol type, the UE may determine condition A is not met and execute step S424. In step S423, the UE may use the QCL assumption indicated by the DCI to receive the PDSCHs associated with non-SBFD symbol type (if any). The UE may use the QCL assumption of default beam to receive the PDSCHs associated with SBFD symbol type (if any).

In step S424, the UE may determine whether condition B is met. Specifically, the UE may determine whether the number of PDSCHs associated with non-SBFD symbol type is equal to the number of PDSCHs associated with the SBFD symbol type. If the number of PDSCHs associated with non-SBFD symbol type is equal to the number of PDSCHs associated with the SBFD symbol type, the UE may determine condition B is met and execute step S425. If the number of PDSCHs associated with non-SBFD symbol type is not equal to the number of PDSCHs associated with the SBFD symbol type (i.e., the number of PDSCHs associated with non-SBFD symbol type is less than the number of PDSCHs associated with the SBFD symbol type), the UE may determine condition B is not met and execute step S426. In step S425, the UE could follow any embodiment in this disclosure to receive the multi-PDSCHs. In step S426, the UE may use the QCL assumption indicated by the DCI to receive the PDSCHs associated with the SBFD symbol type (if any). The UE may use the QCL assumption of default beam to receive the PDSCHs associated with non-SBFD symbol type (if any).

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. The TCI field indicated by the DCI may be applied to the first symbol type or the second symbol type. The symbol type (e.g., first symbol type or second symbol type) to be applied by the TCI field may be explicitly indicated by a DCI, a radio resource control (RRC) configuration, or a medium access control (MAC) control element (CE), or may be implicitly predetermined by specification. If the TCI field is applied to the first symbol type, the QCL assumption indicated by the DCI may be used to receive the first set of PDSCHs. The QCL assumption of default beam may be used to receive the second set of PDSCHs. If the TCI field is applied to the second symbol type, the QCL assumption indicated by the DCI may be used to receive the second set of PDSCHs, and the QCL assumption of default beam may be used to receive the first set of PDSCHs.

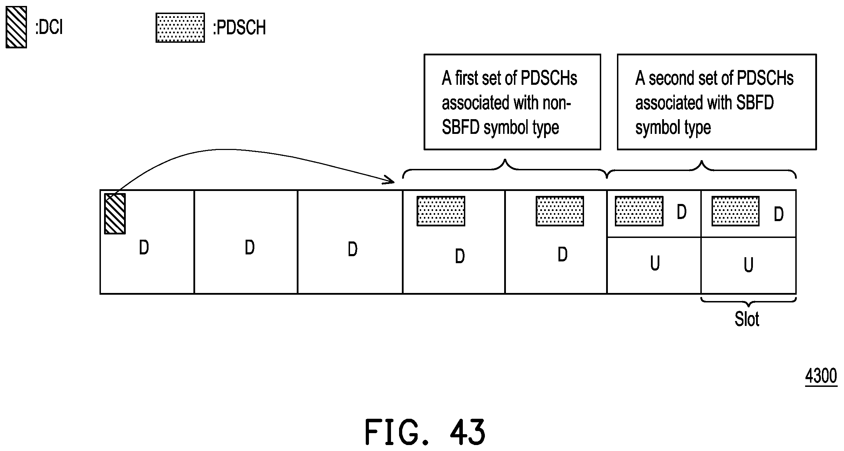

FIG. 43 illustrates a schematic diagram 4300 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* The UE may receive an indication (e.g., via the DCI or other signaling), wherein the indication may inform the UE that the TCI field of the DCI is applied to the SBFD symbol type. Based on the indication, the UE may use the QCL assumption indicated by the DCI to receive the second set of PDSCHs, and the UE may use the QCL assumption of default beam to receive the first set of PDSCHs.

In one embodiment, a UE may be configured with one or more TCI state tables (e.g., two TCI state tables), wherein a first TCI state table may be associated with a first symbol type and a second TCI state table may be associated with a second symbol type. In one embodiment, the number of TCI states in the first TCI state table may be the same as the number of TCI states in the second TCI state table. For example, the UE may be instructed to receive multi-PDSCHs across the first symbol type and the second symbol type. In response thereto, the UE may be configured with the first TCI state table associated with the first symbol type and the second TCI state table associated with the second symbol type. Table 2 is an example of the first TCI state table associated with the non-SBFD symbol type, and Table 3 is an example of the second TCI state table associated with the SBFD symbol type. In one embodiment, the codepoint of the TCI field in the DCI may indicate an order. The UE may obtain a TCI state from the first TCI state table or obtain a TCI state from the second TCI state table by using the order indicated by the DCI. For example, codepoint "000" of a TCI field may indicate the first order. The UE may obtain the TCI state ID (e.g., #A0) from the first entry of the first TCI state table, or the UE may obtain the TCI state ID (e.g., #B0) from the first entry of the second TCI state table.

**Table 2**

| TCI field | TCI state ID |
|---|---|
| 000 | #A0 |
| ... | ... |
| 111 | #A7 |

**Table 3**

| TCI field | TCI state identification (ID) |
|---|---|
| 000 | #B0 |
| ... | ... |
| 111 | #B7 |

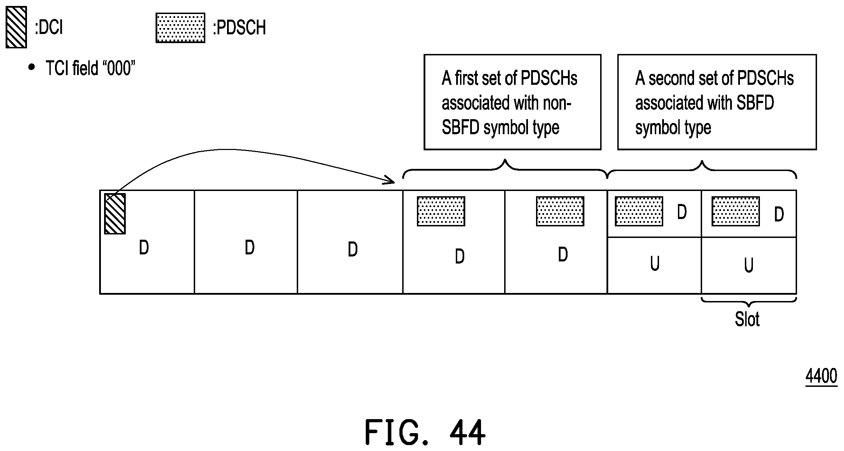

FIG. 44 illustrates a schematic diagram 4400 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* The UE may receive a DCI and obtain a codepoint of the TCI field in the DCI, wherein the TCI field may be applied to both of the first TCI state table and the second TCI state table. Assume that the codepoint is "000". Since the first set of PDSCHs is associated with non-SBFD symbol type, UE may use the QCL assumption indicated by the first TCI state table and the DCI (e.g., #A0) to receive the first set of PDSCHs. Since the second set of PDSCHs is associated with SBFD symbol type, UE may use the QCL assumption indicated by the second TCI state table and the DCI (e.g., #B0) to receive the second set of PDSCHs.

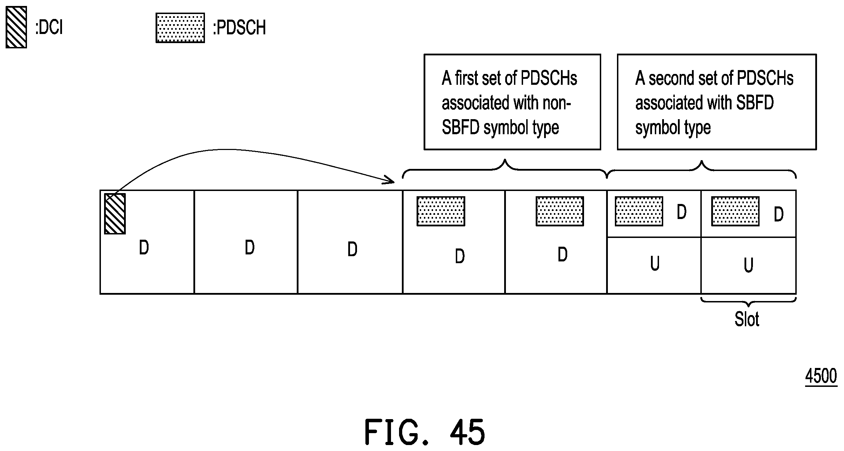

FIG. 45 illustrates a schematic diagram 4500 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the UE receives the DCI in the non-SBFD symbol type, the UE may use the QCL assumption of the DCI reception to receive the first set of PDSCHs. The UE may use the QCL assumption indicated by the TCI field of the DCI to receive the second set of PDSCHs. Since the second set of PDSCHs is associated with the SBFD symbol type, the UE may obtain the QCL assumption from the second TCI state table according to the TCI field.

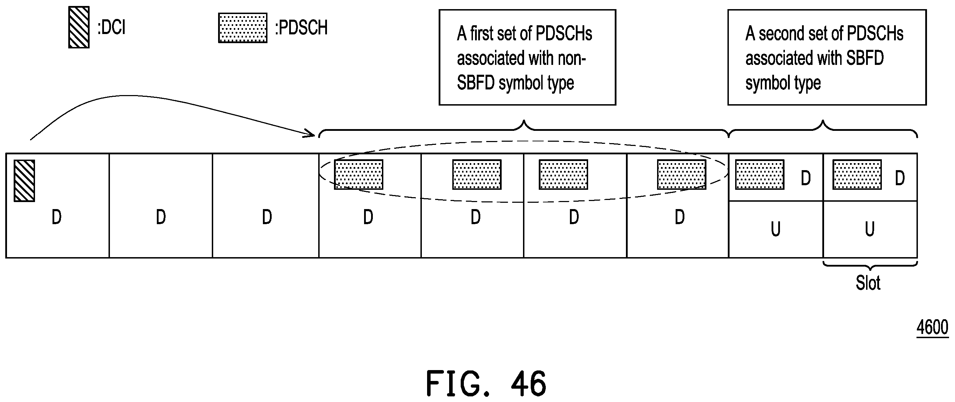

FIG. 46 illustrates a schematic diagram 4600 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since the number of PDSCHs of the first set of PDSCHs is greater than the number of PDSCHs of the second set of PDSCHs, the UE may use QCL assumption indicated by the DCI to receive the first set of PDSCHs, and the UE may use QCL assumption of default beam to receive the second set of PDSCHs. Since the first set of PDSCHs is associated with the non-SBFD symbol type, the UE may obtain the QCL assumption from the first TCI state table according to the TCI field of the DCI.

In one embodiment, a UE may be configured with a TCI state table, and each codepoint indicated by the TCI field in a DCI may be associated with a row of the TCI state table, wherein each row of the TCI state table may include one or more TCI states (e.g., two TCI states), wherein a first TCI state may be associated with a first symbol type and a second TCI state may be associated with a second symbol type. Table 4 is an example of a TCI state table. Codepoint "000" in the TCI field may indicate the first row of the TCI state table, wherein the first row includes TCI state ID "#A0" corresponding to the first symbol type (e.g., non-SBFD symbol type) and TCI state ID "#B0" corresponding to the second symbol type (e.g., SBFD symbol type).

**Table 4**

| TCI field | TCI state ID | TCI state ID |
|---|---|---|
| 000 | #A0 | #B0 |
| ... | ... | ... |
| 111 | #A7 | #B7 |

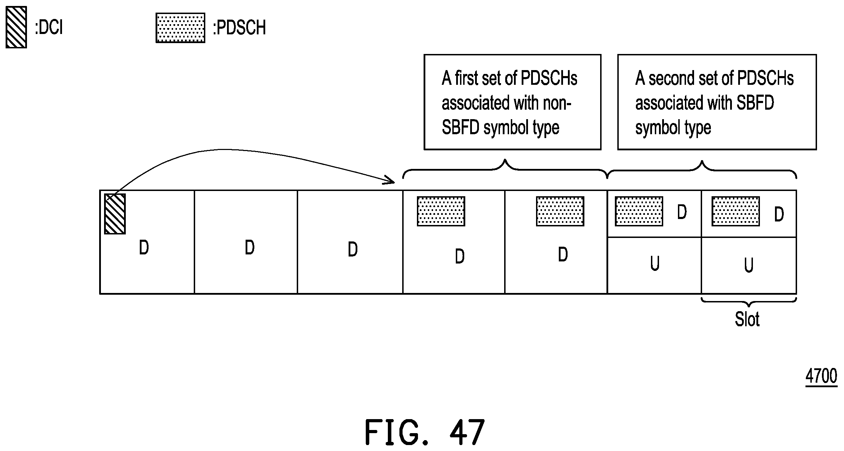

FIG. 47 illustrates a schematic diagram 4700 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* The UE may receive a DCI and obtain a codepoint from a TCI field of the DCI, wherein the codepoint may indicate a first TCI state corresponding to the non-SBFD symbol type and a second TCI state corresponding to the SBFD symbol type in a TCI state table. The UE may use the first TCI state indicated by the DCI to receive the first set of PDSCHs, and the UE may use the second TCI state indicated by the DCI to receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the DCI may include one or more TCI fields (e.g., two TCI fields). The first TCI field may be associated with the first symbol type and the second TCI field may be associated with the second symbol type. The UE may use the QCL assumption indicated by the first TCI field to receive the first set of PDSCHs. The UE may use the QCL assumption indicated by the second TCI field to receive the second set of PDSCHs.

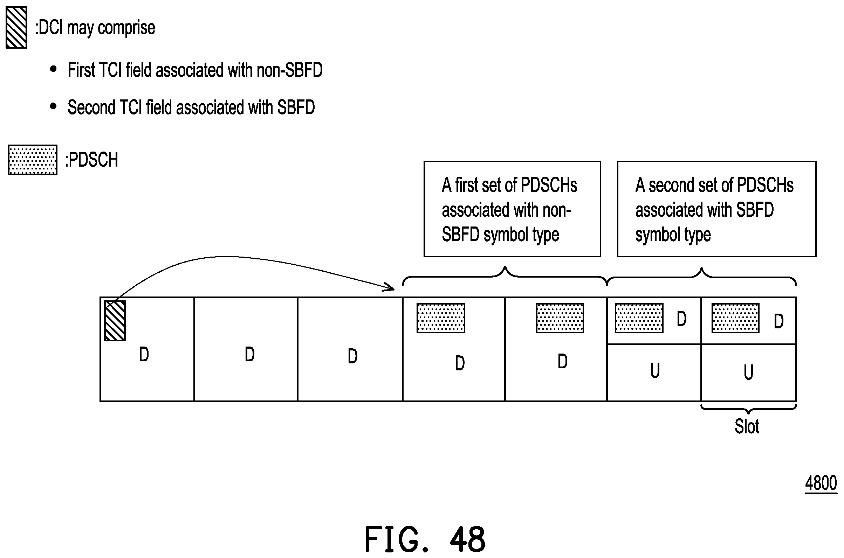

FIG. 48 illustrates a schematic diagram 4800 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* The UE may receive a DCI, wherein the DCI may include a first TCI field associated with the non-SBFD symbol type and a second TCI field associated with the SBFD symbol type. The UE may use the QCL assumption indicated by the first TCI field to receive the first set of PDSCHs. The UE may use the QCL assumption indicated by the second TCI field to receive the second set of PDSCHs.

In one embodiment, a UE may be scheduled with a multi-PDSCHs reception by a DCI, a PDSCH scheduling offset of a set of PDSCHs of the multi-PDSCHs may be greater than or equal to *timeDurationForQCL,* and the set of PDSCHs may be associated with one specific symbol type, wherein the DCI may include one or more TCI fields (e.g., two TCI fields)., The first TCI field may be associated with a first symbol type and the second TCI field may be associated with a second symbol type. If the specific symbol type is same as the first symbol type, the UE may use the QCL assumption indicated by the first TCI field to receive the set of PDSCHs. The UE may ignore the second TCI field. If the specific symbol type is same as the second symbol type, the UE may use the QCL assumption indicated by the second TCI field to receive the set of PDSCHs. The UE may ignore the first TCI field.

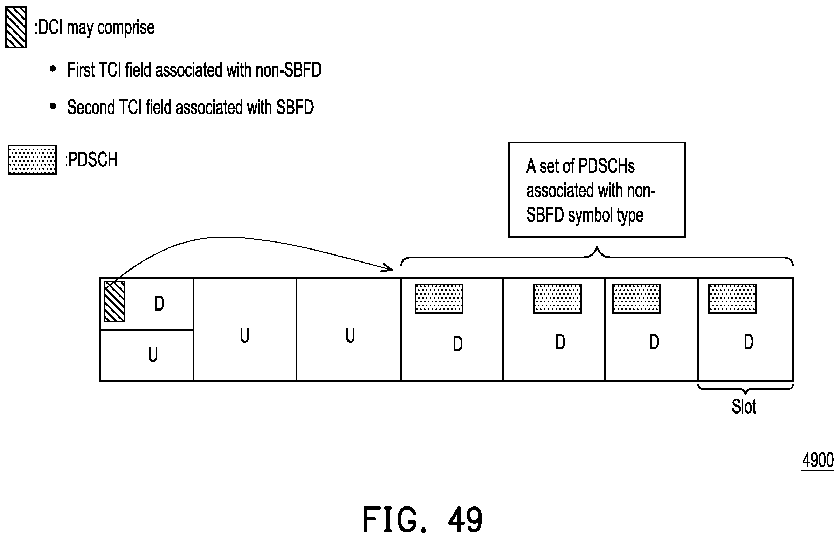

FIG. 49 illustrates a schematic diagram 4900 of PDSCHs reception according to one embodiment of the present disclosure, wherein a set of PDSCHs is associated with the non-SBFD symbol type. A PDSCH scheduling offset for the set of PDSCHs may be greater than or equal to *timeDurationForQCL.* The UE may receive a DCI, wherein the DCI may include a first TCI field corresponding to the non-SBFD symbol type and a second TCI field corresponding to the SBFD symbol type. The UE may use the QCL assumption indicated by the first TCI field to receive the set of PDSCHs. The UE may ignore the second TCI field in the DCI.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the UE receives the DCI in the first symbol type, the QCL assumption of the DCI reception may be used to receive the first set of PDSCHs (if any). The QCL assumption of default beam may be used to receive the second set of PDSCHs (if any). If the UE receives the DCI in the second symbol type, the QCL assumption of the DCI reception may be used to receive the second set of PDSCHs (if any). The QCL assumption of default beam may be used to receive the first set of PDSCHs (if any).

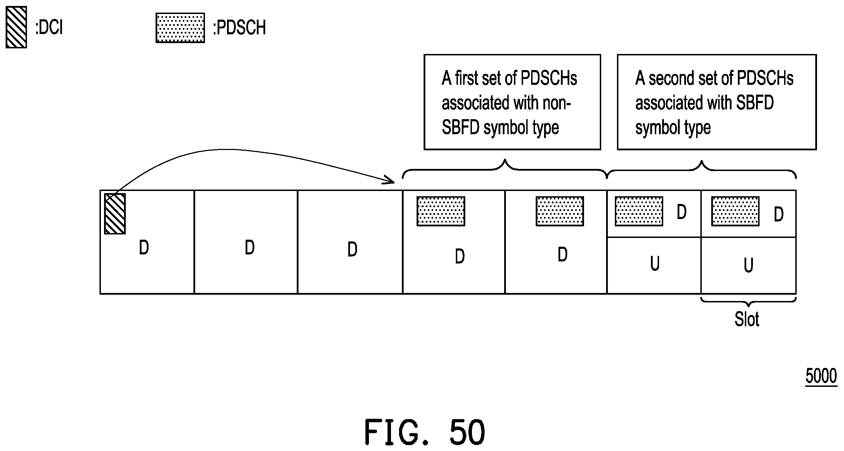

FIG. 50 illustrates a schematic diagram 5000 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Assume that the UE has received a DCI in the non-SBFD symbol type. Since the first set of PDSCHs is associated with the non-SBFD symbol type, the UE may use the QCL assumption of the DCI reception to receive the first set of PDSCHs. The UE may use the QCL assumption of default beam to receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. The UE may use the QCL assumption of default beam to receive the first set of PDSCHs or the second set of PDSCHs.

Referring to FIG. 50. In one embodiment, since the UE has received a DCI and the DCI does not include a TCI field, the UE may use the QCL assumption of default beam to receive the first set of PDSCHs and the second set of PDSCHs.

In one embodiment, a UE may be configured with a TCI state table, wherein the TCI state table may include a codepoint pointing to an empty entry. Table 5 is an example of a TCI state table including codepoint "11" pointing to an empty entry.

**Table 5**

| TCI field | TCI state ID |
|---|---|
| 00 | #A0 |
| 01 | #A1 |
| 10 | #A2 |
| 11 | N/A |

In one embodiment, a UE may be scheduled with a multi-PDSCHs reception by a DCI, and PDSCH scheduling offset for a set of PDSCHs of the multi-PDSCHs may be greater than or equal to *timeDurationForQCL,* wherein the codepoint of the TCI field in the DCI may point to an empty entry of a TCI state table. In response to the codepoint pointing to the empty entry, the UE may use the QCL assumption of default beam to receive the set of PDSCHs accordingly.

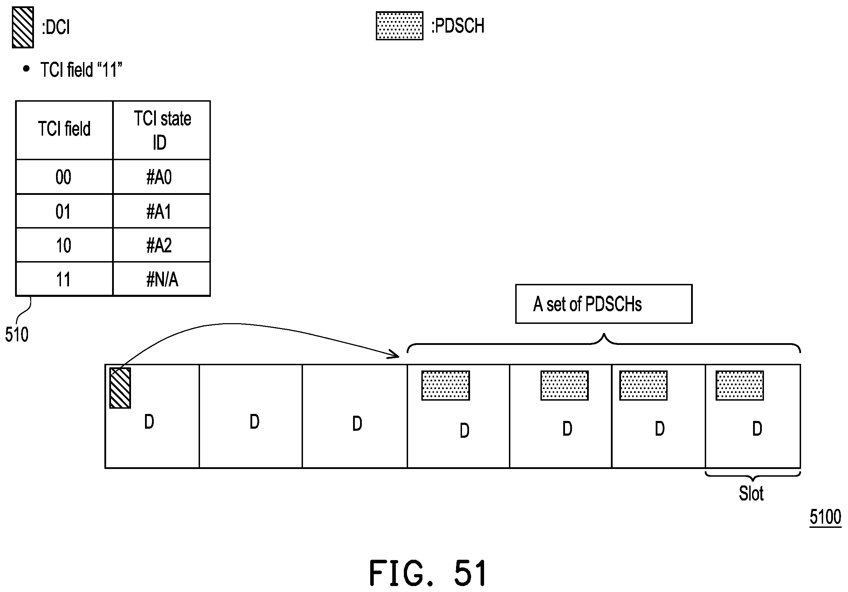

FIG. 51 illustrates a schematic diagram 5100 of PDSCHs reception according to one embodiment of the present disclosure, wherein a set of PDSCHs may be associated with one or more symbol types. Assume that the UE has received a DCI and codepoint "11" of the TCI field in the DCI points to an empty entry in TCI state table 510. In response to the codepoint "11" pointing to an empty entry of TCI state table 510, the UE may use the QCL assumption of default beam to receive the set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the codepoint of the TCI field in the DCI may point to an empty entry of a TCI state table. If the UE receives the DCI in the first symbol type and the codepoint of the TCI field in the DCI points to an empty entry of a TCI state table, the UE may use the QCL assumption of the DCI reception to receive the first set of PDSCHs, and the UE may use the QCL assumption of default beam to receive the second set of PUSCHs. If the UE receives the DCI in the second symbol type and the codepoint of the TCI field in the DCI points to an empty entry of a TCI state table, the UE may use the QCL assumption of the DCI reception to receive the second set of PDSCHs, and the UE may use QCL assumption of default beam to receive the first set of PUSCHs.

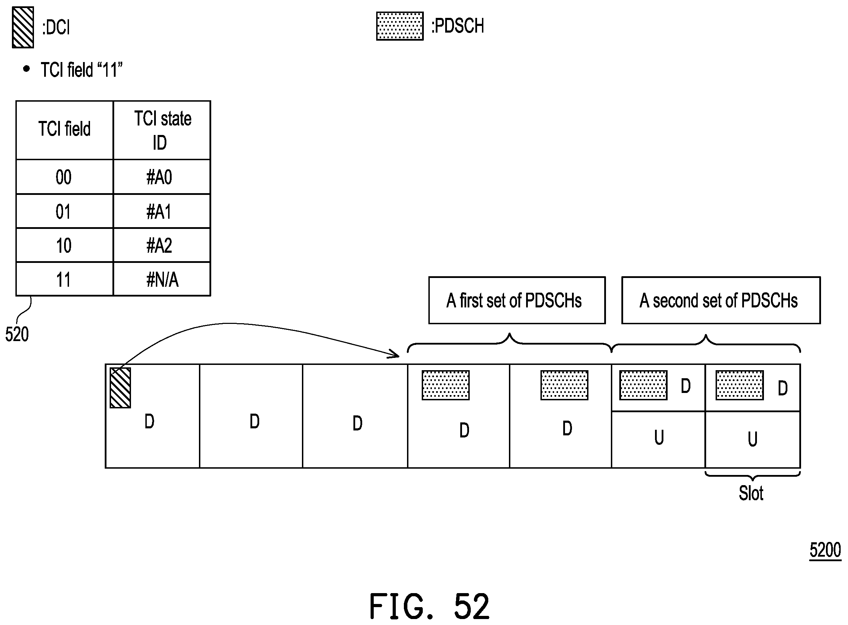

FIG. 52 illustrates a schematic diagram 5200 of PDSCHs reception according to one embodiment of the present disclosure, wherein a first set of PDSCHs may be associated with the non-SBFD symbol type and a second set of PDSCHs may be associated with the SBFD symbol type. Assume that the UE has received a DCI in the non-SBFD symbol type and codepoint "11" of the TCI field in the DCI points to an empty entry in TCI state table 520. In response to the codepoint "11" pointing to an empty entry of TCI state table 520, the UE may use the QCL assumption of the DCI reception to receive the first set of PDSCHs, and the UE may use the QCL assumption of default beam to receive the second set of PUSCHs.

For DCI repetition reception, a UE may use a first QCL assumption and a second QCL assumption to receive the first DCI and the second DCI, respectively. The UE may be scheduled with multi-PDSCHs by the DCI. If one or more PDSCHs of the multi-PDSCHs are associated with the QCL assumption of DCI reception, the UE may use the second QCL assumption to receive the one or more PDSCHs.

For DCI repetition reception, a UE may use a first QCL assumption and a second QCL assumption to receive the first DCI and the second DCI, respectively. The UE may be scheduled with multi-PDSCHs by the DCI. If one or more PDSCHs of the multi-PDSCHs are associated with the QCL assumption of DCI reception, the UE may use the first QCL assumption to receive the one or more PDSCHs.

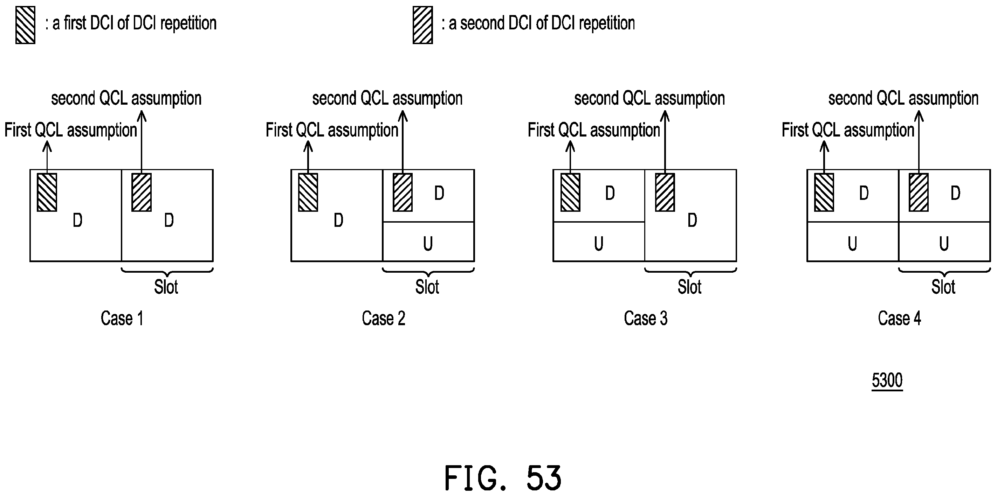

FIG. 53 illustrates a schematic diagram 5300 of DCI reception according to one embodiment of the present disclosure, wherein the DCI reception may include a first DCI reception and a second DCI reception, and the plurality of cases may include: case 1: the UE may receive the first DCI in the non-SBFD symbol type by using the first QCL assumption, and the UE may receive the second DCI in the non-SBFD symbol type by using the second QCL assumption; case 2: the UE may receive the first DCI in the non-SBFD symbol type by using the first QCL assumption, and the UE may receive the second DCI in the SBFD symbol type by using the second QCL assumption; case 3: the UE may receive the first DCI in the SBFD symbol type by using the first QCL assumption, and the UE may receive the second DCI in the non-SBFD symbol type by using the second QCL assumption; and case 4: the UE may receive the first DCI in the SBFD symbol type by using the first QCL assumption, and the UE may receive the second DCI in the SBFD symbol type by using the second QCL assumption.

In one embodiment, when a UE is configured with SBFD resource, the UE may not be configured with DCI repetition. If a UE is configured with DCI repetition, the first DCI candidate resource of the DCI repetition and the second DCI candidate resource of the DCI repetition may not be across different symbol types, or the first DCI candidate resource of the DCI repetition and the second DCI candidate resource of the DCI repetition may not overlap with UL subband.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the UE may be provided with one or more MCSs (e.g., two MCSs). The UE may use the QCL assumption indicated by the DCI to receive the first set of PDSCHs and the second set of PDSCHs, wherein the first MCS may be applied to the first set of PDSCHs, and the second MCS and/or the first MCS may be applied to the second set of PDSCHs.

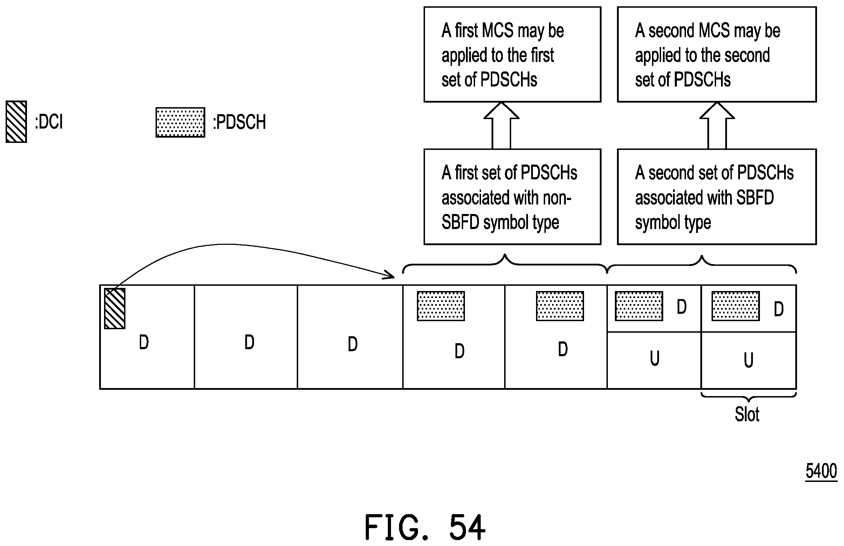

FIG. 54 illustrates a schematic diagram 5400 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* The UE may use the QCL assumption indicated by the DCI to receive the first set of PDSCHs and the second set of PDSCHs. Different MCSs may be applied to different symbol types. For example, a first MCS may be applied to the first set of PDSCHs, and a second MCS different from the first MCS may be applied to the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the UE may be provided with a first MCS by the DCI and may be provided with a second MCS by an RRC configuration, MAC CE or DCI. The first MCS in the DCI may be applied to the first set of PDSCHs, and the first MCS and/or the second MCS may be applied to the second set of PDSCHs if the following conditions are met: the first symbol type is the non-SBFD symbol type, and the second symbol type is the SBFD symbol type; the first symbol type is the SBFD symbol type, and the second symbol type is the non-SBFD symbol type; the UE receives the DCI in the first symbol type; or the codepoint of the TCI field in the DCI is associated with the first symbol type. In one embodiment, the second MCS may be associated with a delta value corresponding to the first MCS. For example, the second MCS may be equal to the sum of the first MCS and the delta value.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the DCI may include a SBFD resource available field with one bit. If the SBFD resource available field indicates "1", the UE may use a first QCL assumption to receive the first set of PDSCHs, and the UE may use a second QCL assumption to receive the second set of PDSCHs, wherein the first QCL assumption and the second QCL assumption may be determined by any embodiment in this disclosure. If the SBFD resource available field indicates "0", the UE may use the QCL assumption indicated by the DCI to receive the first set of PDSCHs and the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the UE receives the DCI in the first symbol type, the UE may use the QCL assumption indicated by the DCI to receive the first set of PDSCHs, and the UE may not receive the second set of PDSCHs. If the UE receives the DCI in the second symbol type, the UE may use the QCL assumption indicated by the DCI to receive the second set of PDSCHs, and the UE may not receive the first set of PDSCHs.

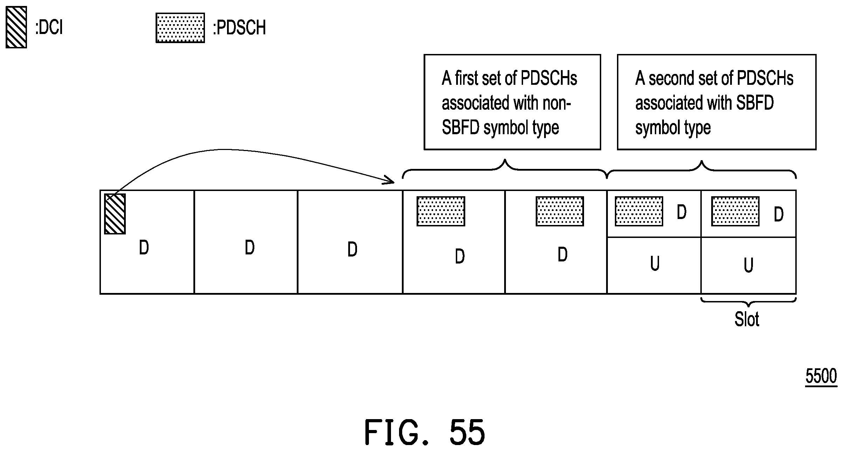

FIG. 55 illustrates a schematic diagram 5500 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Since UE receives the DCI in the non-SBFD symbol type, the UE may use the QCL assumption indicated by the DCI to receive the first set of PDSCHs, and the UE may not receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the UE receives the DCI in the first symbol type, the UE may use the QCL assumption indicated by the DCI to receive the second set of PDSCHs, and the UE may not receive the first set of PDSCHs. If the UE receives the DCI in the second symbol type, the UE may use the QCL assumption indicated by the DCI to receive the first set of PDSCHs, and the UE may not receive the second set of PDSCHs.

In one embodiment, if the DCI does not include the TCI field, then the UE may use the QCL assumption of the DCI reception or default beam to perform DL reception, instead of using the QCL assumption indicated by the DCI.

Referring to FIG. 55. In one embodiment, since the UE receives the DCI in the non-SBFD symbol type, the UE may use the QCL assumption indicated by the DCI to receive the second set of PDSCHs, and the UE may not receive the first set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the first symbol type is the SBFD symbol type, the UE may use the QCL assumption indicated by the DCI to receive the first set of PDSCHs, and the UE may not receive the second set of PDSCHs. If the second symbol type is the SBFD symbol type, the UE may use the QCL assumption indicated by the DCI to receive the second set of PDSCHs, and the UE may not receive the first set of PDSCHs.

Referring to FIG. 55. In one embodiment, since the second set of PDSCHs is associated with the SBFD symbol type, the UE may use the QCL assumption indicated by the DCI to receive the second set of PDSCHs, and the UE may not receive the first set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the first symbol type is the non-SBFD symbol type, the UE may use the QCL assumption indicated by the DCI to receive the first set of PDSCHs, and the UE may not receive the second set of PDSCHs. If the second symbol type is the non-SBFD symbol type, the UE may use the QCL assumption indicated by the DCI to receive the second set of PDSCHs, and the UE may not receive the first set of PDSCHs.

Referring to FIG. 55. In one embodiment, since the first set of PDSCHs is associated with non-SBFD symbol type, the UE may use the QCL assumption indicated by the DCI to receive the first set of PDSCHs, and the UE may not receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the first one of the first set of PDSCHs may be closer to the DCI than the first one of the second set of PDSCHs. That is, the time interval between the DCI and the first one of the first set of PDSCHs may be less than the time interval between the DCI and the first one of the second set of PDSCHs. The UE may use the QCL assumption indicated by the DCI to receive the first set of PDSCHs, and the UE may not receive the second set of PDSCHs.

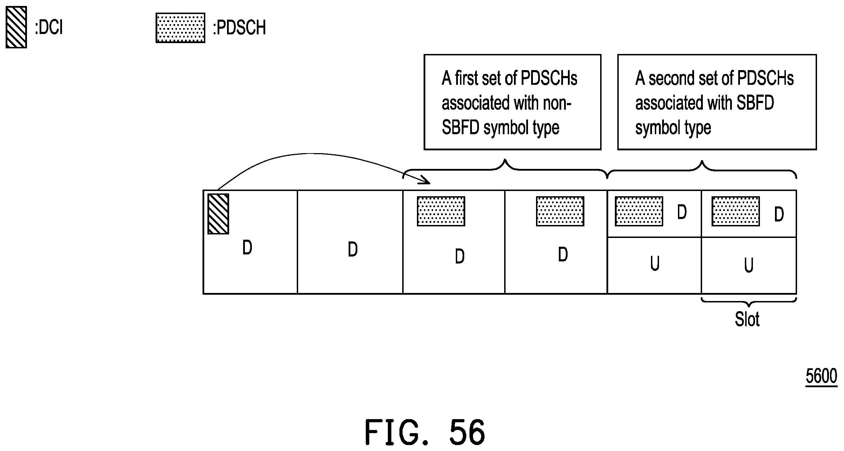

FIG. 56 illustrates a schematic diagram 5600 of PDSCHs reception according to one embodiment of the present disclosure, wherein a first set of PDSCHs is associated with the non-SBFD symbol type, and a second set of PDSCHs is associated with the SBFD symbol type. A PDSCH scheduling offset for the first set of PDSCHs and the second set of PDSCHs may be greater than or equal to *timeDurationForQCL.* Assume that the UE has received a DCI in the non-SBFD symbol type. Since the first PDSCH of the first set of PDSCHs is closer to DCI, the UE may use QCL assumption indicated by the DCI to receive the first set of PDSCHs, and the UE may not receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the first one of the first set of PDSCHs may be closer to the DCI than the first one of the second set of PDSCHs. The UE may use the QCL assumption indicated by the DCI to receive the second set of PDSCHs, and the UE may not receive the first set of PDSCHs.

Referring to FIG. 56. In one embodiment, since the first PDSCH of the first set of PDSCHs is closer to DCI, the UE may use QCL assumption indicated by the DCI to receive the second set of PDSCHs, and the UE may not receive the first set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. If the codepoint of the TCI field in the DCI is associated with the first symbol type, the UE may use the QCL assumption corresponding to the codepoint to receive the first set of PDSCHs, and the UE may not receive the second set of PDSCHs. If the codepoint of the TCI field in the DCI is associated with the second symbol type, the UE may use the QCL assumption corresponding to the codepoint to receive the second set of PDSCHs, and the UE may not receive the first set of PDSCHs.

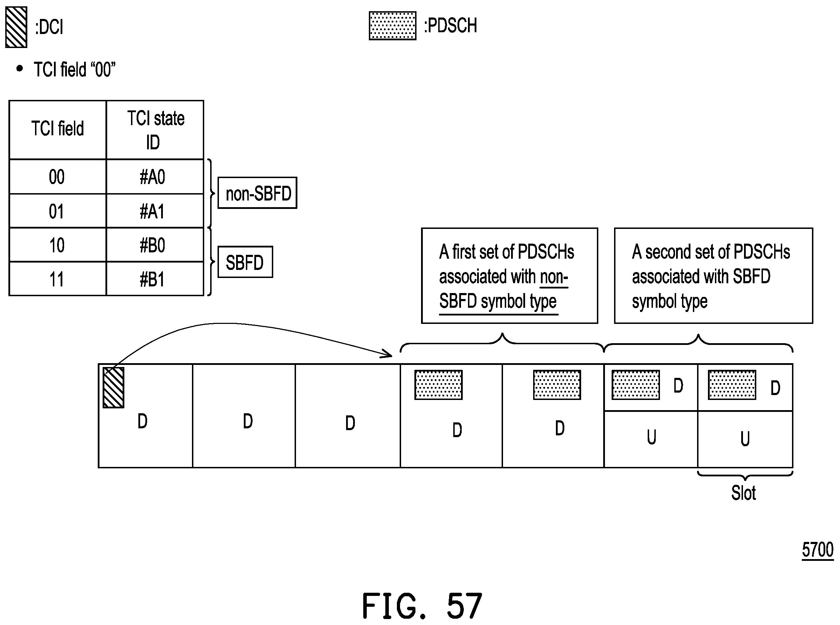

FIG. 57 illustrates a schematic diagram 5700 of PDSCHs reception according to one embodiment of the present disclosure, wherein a first set of PDSCHs may be associated with the non-SBFD symbol type and a second set of PDSCHs may be associated with the SBFD symbol type. A PDSCH scheduling offset for the first set of PDSCHs and the second set of PDSCHs may be greater than or equal to *timeDurationForQCL.* Assume that the UE has received a DCI in the non-SBFD symbol type and codepoint "00" of the TCI field in the DCI is associated with the non-SBFD symbol type. In response to the codepoint "00" being associated with the non-SBFD symbol type, the UE may use the QCL assumption corresponding to the TCI state ID "#A0" to receive the first set of PDSCHs, and the UE may not receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the number of PDSCHs of the first set of PDSCHs may be greater than the number of PDSCHs of the second set of PDSCHs. The UE may use the QCL assumption indicated by the DCI to receive the first set of PDSCHs, and the UE may not receive the second set of PDSCHs.

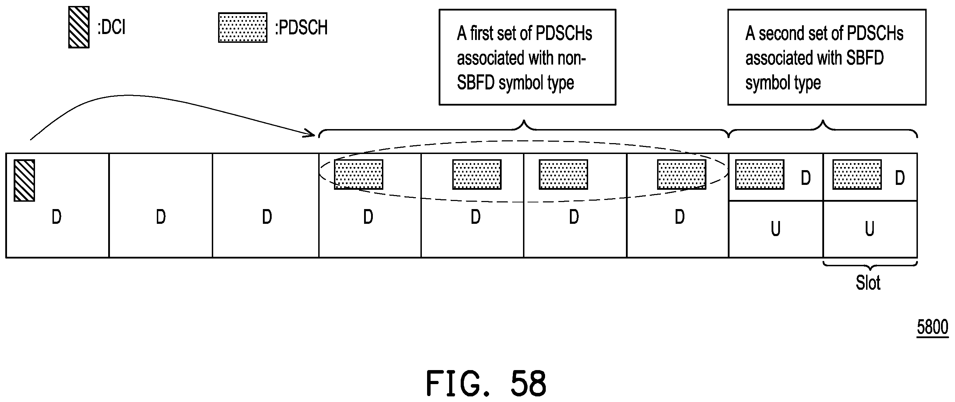

FIG. 58 illustrates a schematic diagram 5800 of PDSCHs reception according to one embodiment of the present disclosure, wherein a first set of PDSCHs may be associated with the non-SBFD symbol type and a second set of PDSCHs may be associated with the SBFD symbol type. A PDSCH scheduling offset for the first set of PDSCHs and the second set of PDSCHs may be greater than or equal to *timeDurationForQCL.* Since there are more PDSCHs in the first set of PDSCHs, the UE may use QCL assumption indicated by the DCI to receive the first set of PDSCHs, and the UE may not receive the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type, wherein the number of PDSCHs of the first set of PDSCHs may equal to the number of PDSCHs of the second set of PDSCHs. The UE may follow any embodiment in this disclosure to receive the first set of PDSCHs or the second set of PDSCHs.

In one embodiment, a UE may be scheduled with a multi-PDSCHs reception by a DCI, a first set of PDSCHs of the multi-PDSCHs may be associated with a first symbol type, and a second set of PDSCHs of the multi-PDSCHs may be associated with a second symbol type. The symbol type (e.g., first symbol type or second symbol type) to be applied by the TCI field may be explicitly indicated by a DCI, an RRC configuration, or a MAC CE, or may be implicitly predetermined by specification. If the TCI field is applied to the first symbol type, the UE may use the QCL assumption indicated by the DCI to receive the first set of PDSCHs, and the UE may not receive the second set of PDSCHs. If the TCI field is applied to the second symbol type, the UE may use the QCL assumption indicated by the DCI to receive the second set of PDSCHs, and the UE may not receive the first set of PDSCHs.

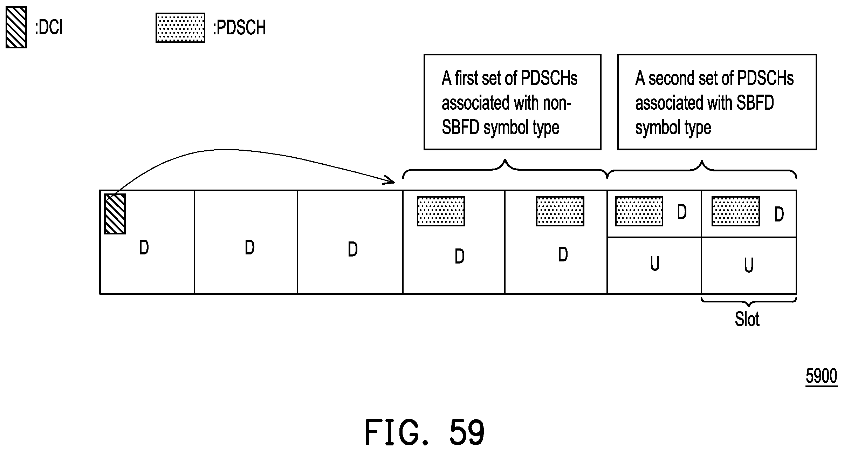

FIG. 59 illustrates a schematic diagram 5900 of PDSCHs reception according to one embodiment of the present disclosure, wherein a first set of PDSCHs may be associated with the non-SBFD symbol type and a second set of PDSCHs may be associated with the SBFD symbol type. A PDSCH scheduling offset for the first set of PDSCHs and the second set of PDSCHs may be greater than or equal to *timeDurationForQCL.* The UE may receive an indication, wherein the indication may inform the UE that the TCI field of the DCI is applied to the SBFD symbol type. Since the TCI field of the DCI is applied to SBFD symbol type, the UE may use the QCL assumption indicated by the DCI to receive the second set of PDSCHs, and the UE may not receive the first set of PDSCHs.

In one embodiment, for a DCI scheduling multi-PDSCHs reception, a first set of PDSCHs of the multi-PDSCHs may be associated with a first symbol type and a second set of PDSCHs of the multi-PDSCHs may be associated with a second symbol type. Hybrid automatic repeat request (HARQ) acknowledgement (ACK) information corresponding to the multi-PDSCHs scheduled by the DCI may be multiplexed with a single physical uplink control channel (PUCCH), wherein the PUCCH may be in a slot that is determined based on K1. K1 may indicated by the PDSCH-to-HARQ_feedback timing indicator field in the DCI. If the PDSCH-to-HARQ_feedback timing indicator field is not present in the DCI, K1 may be provided by *dl-DataToUL-ACK.* K1 may indicate the slot offset between the slot of the last PDSCH scheduled by the DCI and the slot carrying the HARQ-ACK information corresponding to the scheduled multi-PDSCHs. If the last PDSCH is associated with the first symbol type, the UE may use the QCL assumption indicated by the DCI to receive the first set of PDSCHs, and the UE may not receive the second set of PDSCHs. If the last PDSCH is associated with the second symbol type, the UE may use the QCL assumption indicated by the DCI to receive the second set of PDSCHs, and the UE may not receive the first set of PDSCHs.

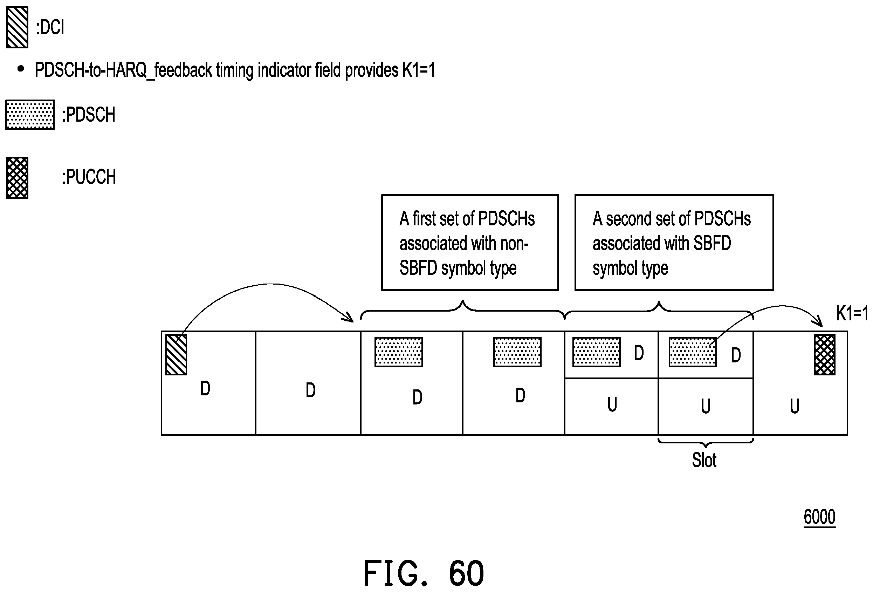

FIG. 60 illustrates a schematic diagram 6000 of PDSCHs reception according to one embodiment of the present disclosure, wherein a first set of PDSCHs may be associated with the non-SBFD symbol type and a second set of PDSCHs may be associated with the SBFD symbol type. A PDSCH scheduling offset for the first set of PDSCHs and the second set of PDSCHs may be greater than or equal to *timeDurationForQCL.* The UE may receive a DCI and obtain K1 (e.g., K1=1) from the PDSCH-to-HARQ_feedback timing indicator field in the DCI. Since the last PDSCH is associated with SBFD symbol type, the UE may use the QCL assumption indicated by the DCI to receive the second set of PDSCHs, and the UE may not receive the first set of PDSCHs.

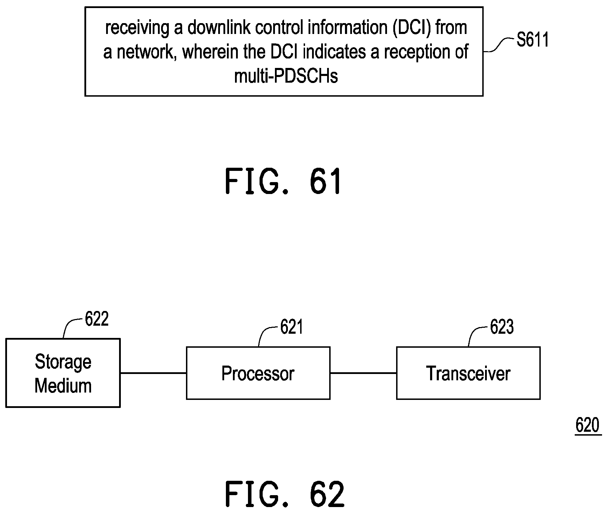

FIG. 61 illustrates a flowchart of a method of multi-PDSCHs reception according to one embodiment of the present disclosure, wherein the method may be performed by a UE. In step S611, receiving a downlink control information (DCI) from a network, wherein the DCI indicates a reception of multi-PDSCHs.

FIG. 62 illustrates a schematic diagram of a UE 620 according to one embodiment of the present disclosure, wherein the UE 620 may implement the methods described in figures 1-61 as well as their exemplary embodiments and alternative variations. The UE 620 may include a processor 621, a storage medium 622, and a transceiver 623. The processor 621 is coupled to the storage medium 622 and the transceiver 623.

The processor 621 could be implemented by using programmable units such as a microprocessor, a micro-controller, a digital signal processor (DSP), a field programmable gate array (FPGA), etc. the functions of the processor 621 may also be implemented with separate electronic devices or ICs. It should be noted that the functions of processor 621 may be implemented with either hardware or software.

The storage medium 622 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 621.

The transceiver 623 may be configured to transmit and receive signals respectively in the radio frequency. The transceiver 623 may also perform operations such as low noise amplifying, impedance matching, frequency mixing, up or down frequency conversion, filtering, amplifying, and so forth. The transceiver 623 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 623 may include an antenna array which may include one or more antennas to transmit and receive omni-directional antenna beams or directional antenna beams.

The concept of "different symbol types" may apply to: SBFD (e.g., first symbol type for non-SBFD and second symbol type for SBFD); ISAC (e.g., first symbol type for communication only and second symbol type for both communication and sensing); or network energy saving (NES) (e.g., first symbol type for power saving mode and second symbol type for normal mode).

The multi-PDSCHs in this disclosure could be: a PDSCH repetitions (the PDSCH repetitions could be across SBFD symbol type and non-SBFD symbol type in different slots, where each repetition has either all SBFD symbol type or all non-SBFD symbol type); or multi-PDSCHs scheduled by a single DCI (the multi-PDSCHs scheduled by a single DCI could be across SBFD symbol type and non-SBFD symbol type in different slots, where each PDSCH has either all SBFD symbol type or all non-SBFD symbol type).

For multi-PDSCHs reception across SBFD symbol type and non-SBFD symbol type in different slots (each PDSCH has either all SBFD symbol type or all non-SBFD symbol type), the following options could be applied: option 1: separate frequency domain resource allocation (FDRA) configurations/indications/interpretations may be applied to the SBFD symbol type and the non-SBFD symbol type; option 2: a single FDRA configuration/indication may be applied to one symbol type (e.g., SBFD or non-SBFD symbol type), and one or more resource block (RB) offset configurations/indications/determinations may be provided to the UE for determining the resource of the other symbol type; option 3: a PDSCH in a slot overlapping with RBs outside the DL usable physical resource blocks (PRBs) in the SBFD symbol type may be invalid (e.g. the PDSCH in the slot may be dropped); option 4: only the PDSCH in one symbol type may be valid, and the PDSCH in the other symbol type may be invalid; option 5: for a PDSCH in a slot overlapping with RBs outside DL usable PRBs in SBFD symbols, only the assigned PRBs within DL usable PRBs may be considered to be valid; or option 6: gNB may not schedule any PDSCH in the SBFD symbol type in a slot to make the PDSCH overlap with PRBs outside DL usable PRBs.

A network (or BS) in this disclosure may be a cell, a serving cell, a transmission reception point (TRP), an unlicensed cell, an unlicensed serving cell, an unlicensed TRP, a next Generation Node B (gNodeB), a gNB, an eNodeB (evolved NodeB), or an eNB, but not limited herein.

Combinations of embodiments disclosed in this disclosure is not precluded.

Based on the above, some low-complexity or low-cost UEs may not be capable of supporting simultaneous reception of multiple downlink shared channels across different symbol types. These limitations necessitate a mechanism for the BS to adapt the scheduling strategy or transmission configuration based on UE capabilities. The disclosure provides a solution that enables accurate downlink reception at the UE, even when downlink transmissions span different types of symbol. The UE of the disclosure may determine whether to receive multi-PDSCHs across different symbol types or not according to a received configuration associated with UE capabilities. If the UE determines not to receive the multi-PDSCHs across different symbol types, the UE may determine the configuration for the symbols to be received and may receive the symbols accordingly. If the UE determines to receive the multi-PDSCHs across different symbol types, the UE may apply various configurations (e.g., TCI states) to receive the multi-PDSCHs.

## Claims

1. A method of multiple physical downlink shared channels, multi-PDSCHs, reception, used by a user equipment, UE (620), wherein the method comprising:
receiving a downlink control information, DCI, from a network, wherein the DCI indicates a reception of multi-PDSCHs.

2. The method according to claim 1, wherein a first physical downlink shared channel, PDSCH, of the multi-PDSCHs is associated with a first symbol type, and a second PDSCH of the multi-PDSCHs is associated with a second symbol type.

3. The method according to claim 2, further comprising:
receiving a configuration, wherein
the configuration informs the UE (620) not to receive the multi-PDSCHs across the first symbol type and the second symbol type; or
the configuration informs the UE (620) to receive the multi-PDSCHs across the first symbol type and the second symbol type.

4. The method according to claim 3, wherein the configuration is associated with a UE capability.

5. The method according to claim 3, further comprising:
in response to informing the UE (620) not to receive the multi-PDSCHs across the first symbol type and the second symbol type, determining whether a first time interval between the first PDSCH and the DCI is less than a second time interval between the second PDSCH and the DCI;
in response to the first time interval being less than the second time interval, receiving the first PDSCH and not receiving the second PDSCH; and
in response to the first time interval being greater than the second time interval, receiving the second PDSCH and not receiving the first PDSCH.

6. The method according to claim 3, further comprising:
in response to informing the UE (620) to receive the multi-PDSCHs across the first symbol type and the second symbol type, receiving a first transmission configuration indicator, TCI, table and a second TCI table from the network, wherein the first TCI table is applied to the first symbol type and the second TCI table is applied to the second symbol type;
receiving the first PDSCH by using a first TCI in the first TCI table, wherein the first TCI corresponds to an order indicated by the DCI; and
receiving the second PDSCH by using a second TCI in the second TCI table, wherein the second TCI corresponds to the order.

7. The method according to claim 2, wherein the first symbol type is a non-subband full duplex symbol type and the second symbol type is a subband full duplex symbol type.

8. The method according to claim 2, wherein the first symbol type corresponds to a power saving mode and the second symbol type corresponds to a normal mode.

9. A user equipment, UE (620), of multiple physical downlink shared channels (multi-PDSCHs) reception, comprising:
a transceiver; and
a processor, coupled to the transceiver, wherein the processor is configured to:
receive a downlink control information, DCI, from a network via the transceiver, wherein the DCI indicates a reception of multi-PDSCHs.

10. The UE (620) according to claim 9, wherein a first physical downlink shared channel, PDSCH, of the multi-PDSCHs is associated with a first symbol type, and a second PDSCH of the multi-PDSCHs is associated with a second symbol type.

11. The UE (620) according to claim 10, wherein the processor is further configured to:
receive a configuration via the transceiver, wherein
the configuration informs the UE (620) not to receive the multi-PDSCHs across the first symbol type and the second symbol type; or
the configuration informs the UE (620) to receive the multi-PDSCHs across the first symbol type and the second symbol type.

12. The UE (620) according to claim 11, wherein the configuration is associated with a UE capability.

13. The UE (620) according to claim 11, wherein the processor is further configured to:
in response to informing the UE (620) not to receive the multi-PDSCHs across the first symbol type and the second symbol type, determine whether a first time interval between the first PDSCH and the DCI is less than a second time interval between the second PDSCH and the DCI;
in response to the first time interval being less than the second time interval, receive the first PDSCH and not receive the second PDSCH; and
in response to the first time interval being greater than the second time interval, receive the second PDSCH and not receive the first PDSCH.

14. The UE (620) according to claim 11, wherein the processor is further configured to:
in response to informing the UE (620) to receive the multi-PDSCHs across the first symbol type and the second symbol type, receive a first transmission configuration indicator, TCI, table and a second TCI table from the network, wherein the first TCI table is applied to the first symbol type and the second TCI table is applied to the second symbol type;
receive the first PDSCH by using a first TCI in the first TCI table, wherein the first TCI corresponds to an order indicated by the DCI; and
receive the second PDSCH by using a second TCI in the second TCI table, wherein the second TCI corresponds to the order.

15. The UE (620) according to claim 10, wherein the first symbol type is a non-subband full duplex symbol type and the second symbol type is a subband full duplex symbol type.
